(19) Europäisches Patentamt
European Patent Office
Office européen des brevets

(11) EP 4 787 734 A1

(12) **EUROPEAN PATENT APPLICATION**
published in accordance with Art. 153(4) EPC

(43) Date of publication:
**05.08.2026 Bulletin 2026/32**

(21) Application number: **24923302.4**

(22) Date of filing: **05.09.2024**

(51) International Patent Classification (IPC):
***H04B 7/185*** *(2006.01)*

(52) Cooperative Patent Classification (CPC):
**H04B 7/185; H04M 1/72454; H04M 1/72457; H04W 84/06**

(86) International application number:
**PCT/CN2024/117166**

(87) International publication number:
**WO 2025/167093 (14.08.2025 Gazette 2025/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2024 CN 202410174039**

(71) Applicant: **HUAWEI TECHNOLOGIES CO., LTD.**
**Shenzhen, Guangdong 518129 (CN)**

(72) Inventors:
- **CHEN, Zhong**
  **Shenzhen, Guangdong 518129 (CN)**
- **YUAN, Linghua**
  **Shenzhen, Guangdong 518129 (CN)**
- **SUN, Libin**
  **Shenzhen, Guangdong 518129 (CN)**
- **LI, Changzhong**
  **Shenzhen, Guangdong 518129 (CN)**
- **ZHU, Xudong**
  **Shenzhen, Guangdong 518129 (CN)**
- **GAN, Wenyu**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **SATELLITE COMMUNICATION METHOD, ELECTRONIC DEVICE, STORAGE MEDIUM AND PROGRAM PRODUCT**

(57) This application relates to the field of satellite communication technologies, and discloses a satellite communication method, an electronic device, a storage medium, and a program product. In the method, for example, the electronic device is a mobile phone, and the mobile phone corresponds to a plurality of radiation patterns. In a satellite communication process, actual beam coverage areas of the plurality of radiation patterns in the mobile phone at a current moment are determined, and then a first radiation pattern whose actual beam coverage area covers a satellite is selected from the plurality of radiation patterns. In addition, a communication connection to the satellite is established based on the first radiation pattern, to execute services such as calls and SMS messages. In the method, because the mobile phone has the plurality of radiation patterns, when a relative location relationship between the mobile phone and the satellite changes or a posture of the mobile phone changes, the first radiation pattern may be automatically selected from the plurality of radiation patterns, to establish a communication connection to the satellite based on the first radiation pattern, and there is no need to change the location or the posture of the mobile phone again. In this way, satellite communication experience of a user can be improved.

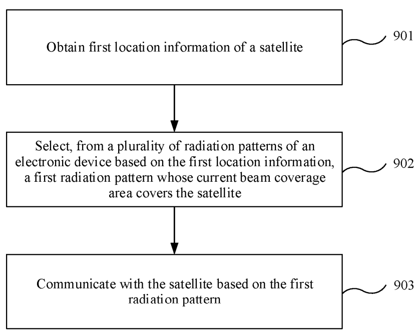

FIG. 9

EP 4 787 734 A1

## Description

This application claims priority to Chinese Patent Application No. 202410174039.9, filed with the China National Intellectual Property Administration on February 6, 2024, and entitled "SATELLITE COMMUNICATION METHOD, ELECTRONIC DEVICE, STORAGE MEDIUM, AND PROGRAM PRODUCT", which is incorporated herein by reference in its entirety.

## TECHNICAL FIELD

This application relates to the field of satellite communication technologies, and in particular, to a satellite communication method, an electronic device, a storage medium, and a program product.

## BACKGROUND

Currently, electronic devices are capable of directly communicating with a satellite (for example, a high-earth orbit satellite). For example, the electronic device is a smartphone (referred to as a mobile phone for short below), and the mobile phone communicates with a satellite. Compared with a base station located on the earth, the satellite is further away from the earth. Therefore, the mobile phone needs to be equipped with high-gain antennas. As beam coverage of the high-gain antenna extends farther, thereby meeting the needs of communication with the distant satellite.

However, in consideration of lightness and thinness of the mobile phone, the mobile phone is usually equipped with only a single high-gain antenna. In addition, to reduce space occupied by the high-gain antenna, a width of the beam coverage area of the high-gain antenna is designed to be relatively narrow. Consequently, even slight changes in the phone's attitude or small variations in its location relative to the satellite can cause the beam to miss the satellite in a width direction, thereby disrupting the communication process. To enable the beam of the mobile phone to cover the satellite in the width direction, users need to continuously adjust the phone's location or attitude to enable the beam to cover the satellite. However, such a method requires the user to move the mobile phone and adjust the phone's location or attitude, to enable the beam coverage area of the mobile phone to cover the satellite. This reduces convenience of the communication process, and also degrades user experience.

## SUMMARY

Embodiments of this application provide a satellite communication method, an electronic device, a storage medium, and a program product.

According to a first aspect, an embodiment of this application provides a satellite communication method, applied to an electronic device. The method includes: obtaining first location information of a satellite; selecting, a first radiation pattern whose current beam coverage area covers the satellite, from a plurality of radiation patterns of the electronic device based on the first location information; and communicating with the satellite based on the first radiation pattern.

A type of the electronic device is not limited in this application. For example, the electronic device may be any device that can establish a communication connection to the satellite, including but not limited to a mobile phone, a tablet computer, and the like. An implementation of the plurality of radiation patterns is not limited in this application. For example, a plurality of physical antennas are disposed inside the mobile phone, and one physical antenna may generate one radiation pattern. For another example, the plurality of radiation patterns are obtained by changing a plurality of different antenna matching circuits corresponding to one physical antenna inside the mobile phone.

In this application, a beam coverage area of a radiation pattern at a current moment may be determined based on current location information (namely, second location information below) of the electronic device and current posture information of the electronic device. In other words, if a location and a posture of the electronic device change, an actual beam coverage area corresponding to the radiation pattern of the electronic device also changes. Then, based on a current beam coverage area of each radiation pattern and the first location information of the satellite, the first radiation pattern whose current beam coverage area covers the satellite may be selected from the plurality of radiation patterns, and communication with the satellite is performed based on the first radiation pattern.

In the method, when a relative location relationship between the mobile phone and the satellite changes, or the posture of the mobile phone changes, the first radiation pattern may be automatically selected from the plurality of radiation patterns, and the communication connection to the satellite does not need to be established by changing the location or the posture of the mobile phone, thereby improving convenience of a communication process, and improving user experience.

In a possible implementation of the first aspect, the communicating with the satellite based on the first radiation pattern includes: based on a first received signal strength corresponding to the first radiation pattern meeting a first strength condition, communicating with the satellite.

In a possible implementation of the first aspect, the method further includes: based on the first received signal strength corresponding to the first radiation pattern not meeting the first strength condition, displaying a user guide diagram, where the user guide diagram is used to prompt a user to rotate and/or move the electronic device.

It may be understood that, after the first radiation pattern is determined, whether the first received signal strength of the first radiation pattern meets the first strength condition further needs to be determined. If the first received signal strength corresponding to the first radiation pattern meets the first strength condition, the communication connection to the satellite is established based on the first radiation pattern. If the first received signal strength corresponding to the first radiation pattern does not meet the first strength condition, the communication connection to the satellite is not established based on the first radiation pattern. For example, in this case, a display of the electronic device may display the user guide diagram shown in FIG. 13 below, to prompt the user to move the electronic device or change the posture of the electronic device, to re-determine the first radiation pattern.

In addition, the first strength condition may be determined based on a current location of the satellite. In a possible implementation of the first aspect, when the satellite is located in only the current beam coverage area of the first radiation pattern, the first strength condition is that a first received signal strength of the first radiation pattern in a first area is greater than a first threshold, and a difference between the first received signal strength and a second received signal strength of a second radiation pattern in the plurality of radiation patterns in the first area is greater than a second threshold, where the first area is determined based on the current beam coverage area; and when the satellite is located in an overlapping area of the first radiation pattern and the second radiation pattern, the first strength condition is that the first received signal strength is greater than the first threshold.

It may be understood that, in this application, there may be an overlapping area between the plurality of radiation patterns. If the satellite is located in an overlapping area between the first radiation pattern and the second radiation patterns in the plurality of radiation patterns, it indicates that the electronic device may communicate with the satellite based on both the first radiation pattern and the second radiation pattern. In this case, after the first radiation pattern is selected, it further needs to be ensured that the first received signal strength corresponding to the first radiation pattern meets the strength condition. Therefore, whether the first received signal strength of the first radiation pattern is greater than the first threshold needs to be determined.

In the method, after the first radiation pattern is determined from the plurality of radiation patterns based on the first location information, and the location information and the posture information of the electronic device, whether the first received signal strength corresponding to the first radiation pattern meets the first strength condition further needs to be determined again, and only when the first strength condition is met, communication with the satellite is performed based on the first radiation pattern. According to the method, the received signal strength of the first radiation pattern used for communication can be ensured, and communication quality can be improved.

In a possible implementation of the first aspect, the plurality of radiation patterns include a third radiation pattern and a fourth radiation pattern that have an overlapping area, and selecting, the first radiation pattern whose current beam coverage area covers the satellite, from the plurality of radiation patterns of the electronic device based on the first location information includes: When the satellite is in the overlapping area, determining that both a current beam coverage area of the third radiation pattern and a current beam coverage area of the fourth radiation pattern cover the satellite; and selecting the first radiation pattern from the third radiation pattern and the fourth radiation pattern based on a movement direction of the satellite.

Specifically, if the satellite moves from a first direction to a second direction, and the third radiation pattern is located in the first direction of the fourth radiation pattern, the fourth radiation pattern is used as the first radiation pattern. For this case, refer to the following content shown in FIG. 11A.

In a possible implementation of the first aspect, the plurality of radiation patterns include a third radiation pattern and a fourth radiation pattern that have an overlapping area, and selecting, the first radiation pattern whose current beam coverage area covers the satellite, from the plurality of radiation patterns of the electronic device based on the first location information includes: When the satellite is located in the overlapping area, determining that both a current beam coverage area of the third radiation pattern and a current beam coverage area of the fourth radiation pattern cover the satellites; based on both a received signal strength of the third radiation pattern in the overlapping area and a received signal strength of the fourth radiation pattern in the overlapping area greater than a third threshold, using a radiation pattern with a higher received signal strength in the third radiation pattern and the fourth radiation pattern as the first radiation pattern; and based on the received signal strength corresponding to only one of the third radiation pattern and the fourth radiation pattern greater than the third threshold, using the radiation pattern whose received signal strength is greater than the third threshold as the first radiation pattern.

It may be understood that, in this manner, if it is determined that the electronic device is located in the overlapping area of the third radiation pattern and the fourth radiation pattern, which radiation pattern is used as the first radiation pattern may be further determined by determining whether received signal strengths corresponding to the two radiation patterns in the overlapping area is greater than the third threshold. Selection of the third threshold is not limited in embodiments of this application. For example, the third threshold may be set based on experience, or may be flexibly adjusted based on an actual application scenario. In this manner of determining the first radiation pattern based on the received signal strength of the radiation pattern, it can also be ensured that the selected first radiation pattern has a high signal strength, thereby ensuring communication quality.

In a possible implementation of the first aspect, the method further includes: both the received signal strength corresponding to the third radiation pattern and the received signal strength corresponding to the fourth radiation pattern not greater than the third threshold, displaying a user guide diagram, where the user guide diagram is used to prompt the user to rotate and/or move the electronic device.

If both the received signal strength of the third radiation pattern and the received signal strength of the fourth radiation pattern are not greater than the third threshold, the first radiation pattern cannot be determined, and the communication connection to the satellite cannot be established. In this case, the display of the electronic device may display the user guide diagram shown in FIG. 13 below, to prompt the user to move the electronic device or change the posture of the electronic device, to re-determine the first radiation pattern.

In a possible implementation of the first aspect, the method further includes: based on the first radiation pattern being selected, determining whether the first radiation pattern is the same as a fifth radiation pattern that is in the plurality of radiation patterns and that is currently used for communication with the satellite, where the first radiation pattern and the fifth radiation pattern have an overlapping area; based on the first radiation pattern different from the fifth radiation pattern, determining whether a first received signal strength corresponding to the first radiation pattern in a first area meets a second strength condition; and based on the first received signal strength meeting the second strength condition, communicating with the satellite based on the first radiation pattern. The second strength condition is that the first received signal strength is greater than a first threshold.

It may be understood that, when communicating with the satellite based on the fifth radiation pattern, the electronic device may re-determine the first radiation pattern that is currently more suitable for communicating with the satellite. If the first radiation pattern is different from the fifth radiation pattern, it indicates that the satellite is currently located in the overlapping area of the first radiation pattern and the fifth radiation pattern. In this case, if the first received signal strength of the first radiation pattern in the first area is greater than the first threshold, the fifth radiation pattern is switched to the first radiation pattern, and communication with the satellite is performed based on the first radiation pattern. The first area may be an overlapping area, or may be a beam coverage area that corresponds to the first radiation pattern and that includes an overlapping area.

In a possible implementation of the first aspect, the first radiation pattern has a corresponding first confidence, and the first strength condition is that a difference between a correction value of a first received signal strength of the first radiation pattern in a first area and a correction value of a second received signal strength of a second radiation pattern in the plurality of radiation patterns in the first area is greater than a fourth threshold. The correction value of the second received signal strength is determined based on a product of the second received signal strength and a second confidence, and a sum of the first confidence and the second confidence is 1.

The first confidence is determined based on accuracy of the first location information, and accuracy of both the current location information and the current posture information of the electronic device. In addition, when the plurality of radiation patterns include the third radiation pattern and the fourth radiation pattern that have the overlapping area, the first confidence is determined based on accuracy of the first location information, the current location information of the electronic device, and the current posture information, and is further determined based on whether the electronic device is located in the overlapping area. In this manner, the first radiation pattern has the corresponding first confidence, and whether the first received signal strength meets the strength condition is determined based on the confidence, so that accuracy of determining the first radiation pattern for communication with the satellite can be improved.

In a possible implementation of the first aspect, the plurality of radiation patterns include a third radiation pattern and a fourth radiation pattern that have an overlapping area, and the selecting, the first radiation pattern whose current beam coverage area covers the satellite, from the plurality of radiation patterns of the electronic device based on the first location information includes: the third radiation pattern and the fourth radiation pattern, using a radiation pattern corresponding to a larger effective beam coverage area included in the overlapping area as the first radiation pattern.

It may be understood that, when the satellite is a high-earth orbit satellite, if the location and the posture of the mobile phone remain unchanged, a relative location between the satellite and the mobile phone also remains unchanged. In this case, a radiation pattern with a larger effective beam coverage area may be used as the first radiation pattern. For details, refer to the following content shown in FIG. 11B.

According to a second aspect, this application provides an electronic device, including a memory and a processor. The memory is configured to store program instructions. The processor is configured to invoke the program instructions in the memory, to enable the electronic device to perform the satellite communication method in any one of the first aspect and the possible implementations of the first aspect.

According to a third aspect, this application provides a computer-readable storage medium, where the readable storage medium stores instructions, and when the instructions are executed on a computer, the computer is enabled to perform the satellite communication method in any one of the first aspect or the possible implementations of the first aspect.

According to a fourth aspect, this application provides a computer program product, including executable instructions. The executable instructions are stored in a readable storage medium. At least one processor of an electronic device may read the executable instructions from the readable storage medium, and the at least one processor executes the executable instructions, so that the electronic device implements the satellite communication method according to any one of the first aspect and the possible implementations of the first aspect.

## BRIEF DESCRIPTION OF DRAWINGS

FIG. 1 is a diagram of a radiation pattern according to some embodiments of this application;

FIG. 2 is a diagram of a relationship between a posture of a mobile phone and a beam coverage area of a radiation pattern according to some embodiments of this application;

FIG. 3 is a diagram of a relationship between a location of a mobile phone and a beam coverage area of a radiation pattern according to some embodiments of this application;

FIG. 4 is a diagram of an interface of communication between a mobile phone and a high-earth orbit satellite according to some embodiments of this application;

FIG. 5 is a diagram of a location relationship between a mobile phone and a low-earth orbit satellite according to some embodiments of this application;

FIG. 6 is a diagram of another location relationship between a mobile phone and a low-earth orbit satellite according to some embodiments of this application;

FIG. 7 is a schematic flowchart of a satellite communication method performed on different occasions according to some embodiments of this application;

FIG. 8 is a diagram of an interface for triggering communication between a mobile phone and a satellite according to some embodiments of this application;

FIG. 9 is a schematic flowchart of a first satellite communication method according to some embodiments of this application;

FIG. 10A is a diagram of comparison between an interface of communication between a mobile phone and a satellite when the mobile phone has one radiation pattern and an interface of communication between a mobile phone and a satellite when the mobile phone has two radiation patterns according to some embodiments of this application;

FIG. 10B is a schematic flowchart of a second satellite communication method according to some embodiments of this application;

FIG. 10C is a schematic flowchart of determining a first radiation pattern according to some embodiments of this application;

FIG. 10D is another schematic flowchart of determining a first radiation pattern according to some embodiments of this application;

FIG. 10E is a diagram of a relative angle relationship between a mobile phone and a satellite according to some embodiments of this application;

FIG. 11A is a diagram of a first scenario of determining a first radiation pattern according to some embodiments of this application;

FIG. 11B is a diagram of a second scenario of determining a first radiation pattern according to some embodiments of this application;

FIG. 12A and FIG. 12B are a schematic flowchart of communication between a mobile phone and a low-earth orbit satellite based on a first radiation pattern on an occasion 1 according to some embodiments of this application;

FIG. 13 is a diagram of a mobile phone interface change when a mobile phone cannot establish a communication connection to a satellite according to some embodiments of this application;

FIG. 14 is another schematic flowchart of communication between a mobile phone and a low-earth orbit satellite based on a first radiation pattern on an occasion 1 according to some embodiments of this application;

FIG. 15A and FIG. 15B are a schematic flowchart of communication between a mobile phone and a low-earth orbit satellite based on a first radiation pattern on an occasion 2 according to some embodiments of this application;

FIG. 16 is a schematic flowchart of communication between a mobile phone and a target low-earth orbit satellite based on a first radiation pattern on an occasion 2 according to some embodiments of this application; and

FIG. 17 is a diagram of a structure of an electronic device according to some embodiments of this application.

## DESCRIPTION OF EMBODIMENTS

Illustrative embodiments of this application include but are not limited to a satellite communication method, an electronic device, a storage medium, and a program product.

The following first explains and describes proper nouns in embodiments of this application.

A radiation pattern is a radiation pattern of an antenna included in an electronic device like a mobile phone, which can be used to characterize a beam coverage area of the antenna. When the electronic device communicates with a satellite, the antenna of the electronic device may transmit an electromagnetic wave within a specific beam coverage area, to communicate with the satellite. The electronic device includes but is not limited to any electronic device like a mobile phone, a tablet computer, a wearable device, or an augmented reality (augmented reality, AR) device. A type and a form of the electronic device are not limited in embodiments of this application. It may be understood that, for ease of description, the following uses an example in which the electronic device is a mobile phone for detailed description.

FIG. 1 is a diagram of a radiation pattern. The radiation pattern may represent a beam coverage area corresponding to the mobile phone in a specific posture and location. FIG. 1 shows a radiation pattern corresponding to an antenna in a mobile phone in a case. An angle corresponding to a shadow region on a horizontal axis represents an azimuth angle of a beam transmitted by the antenna relative to the mobile phone, and an angle corresponding to the shadow region on a vertical axis represents an elevation angle of a beam transmitted by the antenna relative to the mobile phone. Therefore, in FIG. 1, azimuth angles and elevation angles respectively corresponding to a plurality of shadow regions may represent beam coverage areas of beams emitted by the antenna.

It may be understood that, if a location or a posture of the mobile phone changes, the beam coverage area of the radiation pattern of the antenna in the mobile phone also correspondingly changes. Refer to FIG. 2. When a mobile phone 201 is placed perpendicular to the ground, a beam coverage area corresponding to a radiation pattern may be shown as a conical area 202. If the mobile phone 201 tilts rightward by a specific angle, the beam coverage area corresponding to the radiation pattern is correspondingly changed from the conical area 202 to a conical area 203. Therefore, it can be learned that a radiation pattern of an antenna of a same mobile phone is fixed, and when a posture of the mobile phone changes, an actual beam coverage area of the antenna changes.

Refer to FIG. 3. When the mobile phone 201 is placed perpendicular to the ground at a location 1, the beam coverage area corresponding to the radiation pattern may be shown as a conical area 302. If a location of the mobile phone 201 changes from the location 1 to a location 2, the beam coverage area corresponding to the radiation pattern correspondingly changes from the conical area 302 to a conical area 303. Therefore, it can be learned that a radiation pattern of an antenna of a same mobile phone is fixed, and when a location of the mobile phone changes, an actual beam coverage area of the antenna also changes.

A high-earth orbit satellite is an artificial satellite operating in a geosynchronous orbit with an orbital altitude of about 36,000 kilometers. An operating direction of the high-earth orbit satellite is the same as the earth's rotation direction, an operating orbit is a circular orbit located on the earth's equatorial plane, and an operating period is the same as the time of one rotation of the earth. Therefore, the high-earth orbit satellite remains stationary relative to the earth.

A low-earth orbit satellite is an artificial satellite operating in a low-earth orbit or a near-earth orbit, with an orbital altitude of about 400 to 2000 kilometers. The low-earth orbit satellite keeps moving relative to the earth.

Reference signal received power (reference signal received power, RSRP) may represent one of a key parameter of a radio signal strength and a physical layer measurement requirement, and is an average value of signal power received on all resource elements carrying a reference signal.

Based on the foregoing content, due to limited space inside an electronic device like a mobile phone, there is usually only one high-gain antenna, and the antenna corresponds to only one radiation pattern. When a coverage width of a beam coverage area corresponding to the radiation pattern is small, and when a relative location relationship between the mobile phone and a satellite or a posture of the mobile phone changes, a location or the posture of the mobile phone needs to be adjusted again, to change the beam coverage area corresponding to the radiation pattern, so as to communicate with the satellite. This reduces convenience of a communication process.

It may be understood that the mobile phone may establish a communication connection to a satellite within the beam coverage area of a beam generated by the antenna, but cannot establish a communication connection to a satellite outside the beam coverage area.

For example, the satellite is a high-earth orbit satellite. FIG. 4 is a diagram of an interface of communication between a mobile phone and the high-earth orbit satellite. As shown in FIG. 4, a satellite 401 is located in a sector area 402. In other words, it indicates that the satellite 401 is located in a beam coverage area corresponding to an antenna in a mobile phone 201. In this case, the mobile phone 201 may communicate with the satellite 401. In addition, in FIG. 4, the mobile phone 201 has been successfully connected to the satellite 401, and can communicate with the satellite 401. It may be understood that, for ease of description, the beam coverage area corresponding to the mobile phone 201 is represented by using the sector area 402 in the two-dimensional plane. However, it should be understood that, in actual application, the beam coverage area corresponding to the mobile phone 201 may be, for example, the three-dimensional conical area 202 shown above.

Because the satellite 401 is a high-earth orbit satellite, when the mobile phone 201 on the earth does not move, the satellite 401 and the mobile phone 201 remain in a relatively static state.

Therefore, in the scenario shown in FIG. 4, in a process in which a user communicates with the satellite 401 via the mobile phone 201, an included angle corresponding to the sector area 402 is small, that is, a coverage width of the beam coverage area corresponding to the mobile phone 201 is small. Therefore, in the communication process, the user may cause satellite misalignment due to changing a posture of the mobile phone 201 or the like, that is, the sector area 402 cannot cover the satellite 401. As a result, the mobile phone 201 is disconnected from the satellite 401, and the mobile phone 201 needs to adjust a location or a posture to establish a connection to the satellite 401 again.

For example, the satellite is a low-earth orbit satellite. It may be understood that, because the low-earth orbit satellite is moving relative to a mobile phone located on the earth, if the mobile phone corresponding to only one radiation pattern needs to communicate with the low-earth orbit satellite, a posture needs to be continuously adjusted, so that a beam of the mobile phone can cover the low-earth orbit satellite that continuously moves relative to the mobile phone. FIG. 5 is a diagram of a location relationship between a mobile phone and a low-earth orbit satellite. In FIG. 5, a satellite 503 is a low-earth orbit satellite, a sector area 502 is an area in which the mobile phone 201 communicates with the satellite 503 at a moment t1, and a location of the satellite 503 at the moment t1 may be l1. It may be understood that, for ease of illustration, a beam area corresponding to the mobile phone 201 is represented by using the sector area 502 and a sector area 504 in the two-dimensional plane. However, it should be understood that the beam coverage area should actually be the three-dimensional conical area 202 shown above.

For example, the satellite 503 moves from left to right in a perspective shown in FIG. 5. At a moment t2, the satellite 503 moves from the location l1 to a location l2, and the satellite 503 at the moment t2 is not located in the sector area 502 at the moment t1. Therefore, when a relative location of the satellite 503 relative to the mobile phone 201 changes, to maintain communication with the satellite 503, the mobile phone 201 needs to adjust a posture, for example, tilt the mobile phone 201 to the right, to change the beam coverage area corresponding to the mobile phone 201, for example, the beam coverage area corresponding to the mobile phone 201 is changed to the sector area 504, so that the beam coverage area can cover the satellite 503 after movement, and the mobile phone 201 can further communicate with the satellite 503.

It may be understood that, in FIG. 2 to FIG. 5, a beam coverage area represented by each sector area is actually a beam coverage area of a main beam transmitted by an antenna. In other words, strength of the beam is high in the sector area. However, an area other than the sector area may also correspond to a beam, but strength of the beam is low. Therefore, for ease of description, the beam is not shown in the accompanying drawings of this application.

FIG. 6 is a diagram of another location relationship between a mobile phone and a low-earth orbit satellite. In FIG. 6, both the satellite 503 and a satellite 601 are low-earth orbit satellites. A distance between the mobile phone 201 located on the earth and each of the satellite 503 and the satellite 601 is approximately 1175 km, and a distance between the two satellites is fixed. Therefore, based on the content shown in FIG. 6, the mobile phone 201 adjusts a posture to communicate with the satellite 503 until the satellite 503 is not within a visible range of the mobile phone 201 (for example, moves to another hemisphere). In this case, the mobile phone 201 needs to adjust a posture again to change a beam coverage area, so that the beam coverage area of the mobile phone 201 can cover the satellite 601, to establish a communication connection to the satellite 601.

Therefore, it can be learned from the foregoing content that, regardless of whether the mobile phone communicates with a high-earth orbit satellite or a low-earth orbit satellite, because the mobile phone has only one fixed radiation pattern, if the posture or the location of the mobile phone does not change, an actual beam coverage area of the radiation pattern remains unchanged. In addition, a coverage width of the beam coverage area corresponding to the radiation pattern is small (for example, an included angle corresponding to each of the sector area 402 and the sector area 502 is small). Therefore, when the posture of the mobile phone slightly changes, or a relative location relationship between the mobile phone and the satellite slightly changes, a beam cannot cover the satellite in a width direction, and a communication process is affected. To enable the beam of the mobile phone to cover the satellite in the width direction, the user needs to continuously change the location or the posture of the mobile phone to enable the beam to cover the satellite. However, in the method, the location or the posture of the mobile phone needs to be changed. This reduces convenience of a communication process, and also degrades user experience.

It may be understood that a plurality of antennas may be disposed in the mobile phone, so that the mobile phone has a plurality of radiation patterns, that is, the mobile phone can have a plurality of beam coverage areas. For example, one antenna in the mobile phone may correspondingly generate a beam coverage area of one radiation pattern. In this case, a plurality of radiation patterns may be set by disposing a plurality of antennas inside the mobile phone. In this case, the mobile phone may have a plurality of beam coverage areas corresponding to the plurality of radiation patterns. In addition, an antenna matching circuit that corresponds to one antenna and that is disposed inside the mobile phone may be changed, to obtain different radiation patterns at different moments. Specifically, the antenna may be located in different antenna matching circuits by adjusting on/off of a radio frequency switch inside the mobile phone. It may be understood that, different inductors, capacitors, and the like are disposed in different antenna matching circuits. Therefore, when antenna matching circuits in which the antenna is located are different, total impedance in the circuits changes. Consequently, a current flowing through the antenna changes. An electromagnetic field generated by the antenna varies with a current. Consequently, a form of an electromagnetic wave changes, that is, a beam coverage area of the antenna changes.

Based on this, this application provides a satellite communication method. In the method, a plurality of radiation patterns are preset in a mobile phone. Then, in a process of satellite communication, actual beam coverage areas of the plurality of radiation patterns in the mobile phone at a current moment are determined, a first radiation pattern whose beam coverage area covers the satellite is determined from the plurality of radiation patterns, and a communication connection to the satellite is established based on the first radiation pattern.

In some embodiments, after the first radiation pattern is determined, whether a first received signal strength corresponding to the first radiation pattern meets a strength condition further needs to be determined. If the first received signal strength corresponding to the first radiation pattern meets a first strength condition, the communication connection to the satellite is established based on the first radiation pattern. If the first received signal strength corresponding to the first radiation pattern does not meet the first strength condition, the communication connection to the satellite is not established based on the first radiation pattern. For example, when the first received signal strength corresponding to the first radiation pattern does not meet the first strength condition, a display of the mobile phone may display a user guide diagram, to prompt a user to move the mobile phone or change a posture of the mobile phone, to determine the first radiation pattern again. Alternatively, prompt information may be displayed on the display of the mobile phone, to prompt the user to suspend a communication process.

In addition, the first strength condition may be determined based on a current location of the satellite. For example, if it is determined that there is only one radiation pattern in the plurality of radiation patterns whose beam coverage area covers the satellite, after the radiation pattern is used as the first radiation pattern, not only whether the first received signal strength corresponding to the first radiation pattern is greater than a first threshold needs to be determined, but also whether a difference between the first received signal strength corresponding to the first radiation pattern and a received signal strength (namely, a second received signal strength) corresponding to another radiation pattern (namely, a second radiation pattern) is greater than a second threshold needs to be determined. In this way, the received signal strength of the determined first radiation pattern can be better. If it is determined that there are multiple (for example, two) radiation patterns in the plurality of radiation patterns whose beam coverage areas cover the satellite, only whether the first received signal strength is greater than the first threshold needs to be determined.

In some embodiments, if it is determined that there are multiple radiation patterns in the plurality of radiation patterns whose beam coverage areas cover the satellite, for example, there are two radiation patterns whose beam coverage areas cover the satellite, one first radiation pattern further needs to be determined from the two determined radiation patterns. Specifically, a radiation pattern with a highest received signal strength may be used as the first radiation pattern, and then a communication connection to the satellite is established based on the first radiation pattern. In addition, the first radiation pattern may alternatively be determined based on a movement direction of the satellite. For example, if the satellite moves from left to right relative to the mobile phone, and a radiation pattern 1 is located on the right side of a radiation pattern 2, the radiation pattern 1 may be used as the first radiation pattern.

In some other embodiments, if there is no radiation pattern, in the plurality of radiation patterns, whose beam coverage area covers the satellite, the display of the mobile phone may also display the user guide diagram, to prompt the user to move the mobile phone or change the posture of the mobile phone. In this way, whether there is the first radiation pattern whose beam coverage area covers the satellite is determined again based on a changed location and posture of the mobile phone.

In some other embodiments, when the mobile phone does not communicate with the satellite, an occasion on which the mobile phone determines the first radiation pattern may be receiving a communication instruction of the user. For example, if the user enables an "Enable satellite communication" switch on the display of the mobile phone, the mobile phone may start to determine the first radiation pattern, and perform satellite communication based on the first radiation pattern. In addition, when the mobile phone has communicated with the satellite based on one radiation pattern, an occasion for the mobile phone to re-determine a first radiation pattern currently suitable for communication with the satellite may be a posture change of the mobile phone, a location change of the mobile phone relative to the satellite, poor quality of a satellite communication signal, or the like. Alternatively, the mobile phone may determine the first radiation pattern at a fixed time interval, to ensure that a communication signal between the mobile phone and the satellite remains in an optimal state.

In the method provided in embodiments of this application, the mobile phone corresponds to a plurality of radiation patterns. When the posture of the mobile phone changes or a relative location relationship between the mobile phone and the satellite changes, the mobile phone may automatically select a radiation pattern whose beam coverage area can cover the satellite, and establish a connection to the satellite based on the radiation pattern. The user does not need to change (or does not need to greatly change) the posture or the location of the mobile phone. In this way, convenience of a communication process can be improved, and user experience can also be improved.

The following first describes an execution occasion of the satellite communication method provided in embodiments of this application.

FIG. 7 is a schematic flowchart of performing a satellite communication method on different occasions according to this application, and the method includes the following steps.

701: Start.

In this embodiment of this application, an example in which an electronic device is a mobile phone is used. This step may indicate the mobile phone to determine a satellite and establish a communication connection to the satellite. For example, after detecting a start instruction of a user, the mobile phone may start to determine the satellite. It may be understood that the satellite in this embodiment of this application may be a high-earth orbit satellite, or may be a low-earth orbit satellite. If the satellite is a high-earth orbit satellite, the mobile phone may directly determine a first radiation pattern based on the high-earth orbit satellite, and then establish the communication connection to the satellite. If the satellite is a low-earth orbit satellite, the mobile phone may select, from a plurality of low-earth orbit satellites, a to-be-connected low-earth orbit satellite. A manner of determining the to-be-connected low-earth orbit satellite is not limited in embodiments of this application. For example, the mobile phone may separately calculate a distance between the mobile phone and each low-earth orbit satellite, and then select a low-earth orbit satellite closest to the mobile phone as the to-be-connected satellite.

In addition, a form of the start instruction is not limited in embodiments of this application. For example, the start instruction may be a voice instruction, a gesture instruction, a touch instruction for a display of the mobile phone, or the like. For example, the start instruction is the touch instruction. For example, after detecting an enabling operation of a related switch on the display, the mobile phone may perform subsequent operations such as determining the first radiation pattern, and performing satellite communication based on the first radiation pattern.

FIG. 8 is a diagram of an interface for triggering communication between a mobile phone and a satellite. As shown in FIG. 8, a display interface 801 of the mobile phone displays an "Enable satellite communication" switch 802. If the mobile phone detects that the switch is switched from an off state to an on state, the mobile phone may start to determine the to-be-connected satellite. It should be understood that the display interface 801 further includes a "SIM card selection" entry, a "FAQs" entry, a usage description of satellite communication, and the like. Content of the display interface 801 is not specifically limited in this application.

702: Determine the first radiation pattern and execute a service.

It may be understood that, after detecting the start instruction of the user and determining the to-be-connected satellite, the mobile phone may further determine, from a plurality of radiation patterns, the first radiation pattern whose current beam coverage area covers the satellite, and communicate with the satellite based on the first radiation pattern, to execute the service. A type of the service is not limited in embodiments of this application. For example, the service may be a call service, or may be an SMS service.

It may be understood that this step may be performed by a service enabling module (or a satellite searching enabling module) inside the mobile phone. This is not limited in embodiments of this application.

For ease of subsequent description, an occasion for determining the first radiation pattern for the first time may be referred to as an occasion 1 for short.

703: Re-determine the first radiation pattern at different moments, which involves radiation pattern switching, and execute a service.

It may be understood that the step of determining the first radiation pattern in step 702 is determining the first radiation pattern for the first time. In contrast, this step may represent a process of re-determining the first radiation pattern. As described above, when the mobile phone has communicated with the satellite based on one radiation pattern, an occasion for the mobile phone to re-determine the first radiation pattern currently suitable for communication with the satellite may be a posture change of the mobile phone, a location change of the mobile phone relative to the satellite, poor quality of a satellite communication signal, or the like. Alternatively, the mobile phone may determine the first radiation pattern at a fixed time interval, to ensure that a communication signal between the mobile phone and the satellite remains in an optimal state.

For example, when the mobile phone communicates with the satellite based on a radiation pattern 1, if the mobile phone re-determines that the first radiation pattern currently suitable for communication with the satellite is a radiation pattern 2, the mobile phone may determine whether the radiation pattern 1 is the same as the radiation pattern 2. If the radiation pattern 1 is the same as the radiation pattern 2, the radiation pattern does not need to be switched, and communication with the satellite is still performed based on the radiation pattern 1. If the radiation pattern 1 is not the same as the radiation pattern 2, the mobile phone may switch the radiation pattern, to be specific, the mobile phone no longer performs communication based on the radiation pattern 1, but performs communication based on the radiation pattern 2. It may be understood that, in this case, it indicates that the radiation pattern 1 and the radiation pattern 2 have an overlapping area, and the satellite is currently located in a beam coverage area corresponding to the overlapping area. In this way, when the satellite is in the overlapping area, the mobile phone may re-determine the first radiation pattern (namely, the radiation pattern 2) currently suitable for communication with the satellite, and switch the radiation pattern. In this manner, it can be ensured that the radiation pattern is switched when communication between the mobile phone and the satellite is not interrupted, so that communication quality can be improved, and user experience can be improved.

If there is no overlapping area between the plurality of radiation patterns, the radiation pattern switching may be as follows: After determining that the mobile phone is disconnected from the satellite, the mobile phone determines the first radiation pattern from the plurality of radiation patterns again, and establishes a communication connection to the satellite based on the first radiation pattern. Specifically, if the mobile phone originally communicates with the satellite based on the radiation pattern 1, because the satellite is no longer in a beam coverage area of the radiation pattern 1, the mobile phone cannot continue to communicate with the satellite based on the radiation pattern 1, that is, the mobile phone is disconnected from the satellite. After detecting that the mobile phone is disconnected from the satellite, the mobile phone may determine the first radiation pattern from the plurality of radiation patterns again. If the first radiation pattern is different from the radiation pattern 1, the mobile phone switches from the radiation pattern 1 to the first radiation pattern, communicates with the satellite based on the first radiation pattern, and executes the service.

It may be understood that this step may be performed by a service maintaining module in the mobile phone. This is not limited in embodiments of this application.

For ease of subsequent description, the occasion for re-determining the first radiation pattern may be referred to as an occasion 2 for short.

704: End the service.

For example, the service is a call service, and ending the service means ending a call. For example, the user may end the call by tapping a hang-up control on the display of the mobile phone. If the service is an SMS service, the service ends after an SMS message is sent.

705: End.

It may be understood that this step means that the mobile phone ends the communication connection to the satellite. For example, the user may indicate, by tapping a disconnection control on the display of the mobile phone, the mobile phone to end the communication connection to the satellite.

It may be understood that, regardless of the occasion 1 or the occasion 2, a process of determining the first radiation pattern from the plurality of radiation patterns and performing satellite communication based on the first radiation pattern is involved. Therefore, FIG. 9 is a schematic flowchart of a first satellite communication method, and the method may include the following steps.

901: Obtain first location information of a satellite.

A manner in which a mobile phone obtains the first location information of the satellite is not limited in embodiments of this application. For example, the satellite may send ephemeris information of the satellite to the mobile phone by sending a broadcast signal, and the mobile phone may further determine the first location information of the satellite based on the ephemeris information of the satellite.

902: Select, a first radiation pattern whose current beam coverage area covers the satellite, from a plurality of radiation patterns of an electronic device based on the first location information.

It may be understood that the plurality of radiation patterns in this application may have an overlapping area, or may have no overlapping area. This is not limited in embodiments of this application. In addition, the mobile phone may obtain different radiation patterns via a built-in antenna. For example, a plurality of radiation patterns may be obtained by changing an antenna matching circuit of one antenna in the mobile phone, or a plurality of antennas may be disposed in the mobile phone, to obtain a plurality of radiation patterns, that is, one antenna corresponds to one radiation pattern. A manner of obtaining the plurality of radiation patterns by changing the antenna matching circuit of the antenna has been described above, and details are not described herein again.

It may be understood that, based on the foregoing description, for any radiation pattern of the mobile phone, if a posture or a location of the mobile phone changes, an actual beam coverage area corresponding to the radiation pattern also changes. Therefore, in this embodiment of this application, the mobile phone may determine a current beam coverage area of each radiation pattern based on current posture information and second location information of the mobile phone. A manner of obtaining the second location information and the posture information of the mobile phone is not limited in embodiments of this application. For example, the mobile phone may determine the second location information of the mobile phone based on a built-in location sensor, or the mobile phone may separately obtain orientation information, acceleration information, gravity information, and the like of the mobile phone based on a built-in magnetometer, a built-in accelerometer, a built-in gravimeter, and the like, to further determine the posture information of the mobile phone in the three-dimensional space.

After determining the current beam coverage area of each radiation pattern, the mobile phone may select, the first radiation pattern whose current beam coverage area covers the satellite, from the plurality of radiation patterns based on the first location information of the satellite.

It may be understood that, if the mobile phone determines, based on the first location information and the current beam coverage area of each radiation pattern, that only one radiation pattern whose current beam coverage area covers the satellite, the mobile phone may directly use the radiation pattern as the first radiation pattern.

If the mobile phone determines, based on the first location information and the current beam coverage area of each radiation pattern, that a plurality of radiation patterns whose current beam coverage areas cover the satellite, the mobile phone further needs to select one radiation pattern from the plurality of radiation patterns as the first radiation pattern. A specific manner of selecting one radiation pattern from the plurality of radiation patterns as the first radiation pattern is described below, and details are not described herein.

903: Communicate with the satellite based on the first radiation pattern.

It may be understood that, after determining the first radiation pattern, the mobile phone may communicate with the satellite based on the first radiation pattern, to complete a communication service, for example, a call service or an SMS service.

FIG. 10A is a diagram of comparison between an interface of communication between a mobile phone and a satellite when the mobile phone has one radiation pattern and an interface of communication between a mobile phone and a satellite when the mobile phone has two radiation patterns. As shown in (1) in FIG. 10A, a sector area 402 (namely, a sector area ABCD) represents a beam coverage area corresponding to a radiation pattern 1, and in this case, a satellite 401 is located in the sector area 402. Therefore, in this case, that connection succeeds is displayed in an interface of the mobile phone. If the satellite 401 moves outside the sector area 402, for example, moves to a point P in (1), the mobile phone needs to change a location or a posture, to establish a communication connection to the satellite 401 again.

However, as shown in (2) in FIG. 10A, the sector area 402 represents the beam coverage area corresponding to the radiation pattern 1, and a sector area 403 (namely, a sector area ECFH) represents a beam coverage area corresponding to a radiation pattern 2. The satellite 401 is currently not located in the sector area 402, but is located in the sector area 403. In this case, the mobile phone does not need to change a location or a posture, and may directly communicate with the satellite 401 based on the radiation pattern 2.

In the method provided in this embodiment of this application, the mobile phone has a plurality of corresponding radiation patterns. The mobile phone may select, from the plurality of radiation patterns based on current location information and posture information of the mobile phone and the first location information of the satellite, the first radiation pattern whose current beam coverage area covers the satellite, and communicate with the satellite based on the first radiation pattern. In this way, in comparison with a case in which there is only one radiation pattern, the mobile phone may directly determine the radiation pattern whose beam coverage area covers the satellite, and can communicate with the satellite without changing a location or a posture, thereby improving convenience of a communication process and improving user experience.

In some embodiments, after the first radiation pattern is determined, whether a first received signal strength of the first radiation pattern meets a first strength condition further needs to be determined. If the first received signal strength corresponding to the first radiation pattern meets the first strength condition, the communication connection to the satellite is established based on the first radiation pattern. If the first received signal strength corresponding to the first radiation pattern does not meet the first strength condition, the communication connection to the satellite is not established based on the first radiation pattern. For example, in this case, a user guide diagram may be displayed on the display of the mobile phone, to prompt the user to change a location or a posture of the mobile phone, so as to determine the first radiation pattern again. Alternatively, prompt information may be displayed on the display of the mobile phone, to prompt the user to suspend a communication process.

The first intensity condition may also vary with a location of the satellite. A correspondence between the location of the satellite and the first intensity condition is described below, and details are not described herein.

It may be understood that, in the steps shown in FIG. 9, because the current beam coverage area is determined based on the current location information and the current posture information of the mobile phone, a process of determining the first radiation pattern is determining, from the plurality of radiation patterns, the first radiation pattern based on the first location information of the satellite, and the current location information (for example, the second location information) and the current posture information of the mobile phone. In other words, in some other embodiments, the mobile phone may first determine a relative location relationship between the satellite and the mobile phone based on the first location information of the satellite and the second location information of the mobile phone, and then determine the first radiation pattern from the plurality of radiation patterns based on the relative location relationship and the posture of the mobile phone. This manner is essentially the same as the manner shown in FIG. 9.

The following describes the method provided in this application again by using this manner and an example in which the strength condition further needs to be determined after the first radiation pattern is determined.

FIG. 10B is a schematic flowchart of a second satellite communication method. As shown in FIG. 10B, an application processor (application processor, AP) may determine a relative location relationship (for example, relative location information) between a mobile phone and a satellite based on satellite information (for example, ephemeris information, which may represent first location information) and mobile phone information (for example, global positioning system (global positioning system, GPS) information, which may represent second location information). For example, the relative location information may be represented in a form of an azimuth angle and an elevation angle between the mobile phone and the satellite. In some embodiments, the second location information may alternatively be BeiDou information obtained based on the BeiDou satellite. In other words, the mobile phone may obtain the second location information of the mobile phone based on the BeiDou satellite. In addition, the AP may further determine a posture of the mobile phone (that is, a spatial location of an antenna beam center) based on mobile phone information such as magnetometer information, accelerometer information, and gravimeter information. The posture of the mobile phone may alternatively be represented in a form of an azimuth angle and an elevation angle of the mobile phone. This is not limited in embodiments of this application.

Then, the AP determines a first radiation pattern from a plurality of radiation patterns based on the relative location information of the mobile phone and the satellite, the posture of the mobile phone, and pre-stored radiation pattern information of the plurality of radiation patterns, and sends the determined first radiation pattern to a baseband chip (baseband integrated circuit, BBIC) or a modem (modem) in the BBIC. In addition, a radio frequency integrated chip (radio frequency integrated circuit, RFIC) in the mobile phone may send, to the BBIC via a serializer and a deserializer (Serializer/Deserializer, Serdes), received signal strengths (namely, RX received signal strengths) that correspond to different radiation patterns and that are detected by an antenna (ANT) module.

The BBIC determines, based on the first radiation pattern sent by the AP and a first received signal strength of the received first radiation pattern, whether to communicate with the satellite based on the first radiation pattern.

It may be understood that a location of a fusion decision-making module is not limited in embodiments of this application. In other words, an execution chip that makes a decision on whether to communicate with the satellite based on the first radiation pattern is not limited in this application. For example, the AP makes a decision. In other words, the RFIC sends the RX signal strength to the AP via the BBIC. Then, after determining the first radiation pattern from the plurality of radiation patterns, the AP performs fusion decision-making based on the signal strength of the first radiation pattern, to determine whether to communicate with the satellite based on the first radiation pattern.

For another example, the RFIC makes a decision. In other words, after determining the first radiation pattern from the plurality of radiation patterns, the AP sends the first radiation pattern to the RFIC via the BBIC, and then the RFIC performs fusion decision-making based on the first radiation pattern and the RX signal strength, to determine whether to communicate with the satellite based on the first radiation pattern. This manner of performing fusion decision-making based on the RFIC can improve a decision-making speed, and further improve decision-making efficiency.

FIG. 10C is a schematic flowchart of determining a first radiation pattern. As shown in FIG. 10C, a location (for example, the first location information) of the satellite may be determined based on the ephemeris information of the satellite, and a location (for example, the second location information) of the mobile phone may be determined based on the GPS information or the BeiDou satellite information of the mobile phone. Then, the location of the satellite and the location of the mobile phone are input into a module for calculating a relative angle between the mobile phone and the satellite. The module may estimate relative angle information of the mobile phone and the satellite, and further output the relative location information of the mobile phone and the satellite.

In addition, in FIG. 10C, an orientation of the mobile phone, that is, posture information of the mobile phone, may be further determined based on a magnetometer (or a compass), an accelerometer (accelerometer, A), and a gravimeter (gravimeter, G) inside the mobile phone. Then, an integrated decision on the first radiation pattern is made based on the relative location information of the mobile phone and the satellite, the posture information of the mobile phone, and the pre-stored radiation pattern information (not shown in the figure) included in the mobile phone.

FIG. 10D is another schematic flowchart of determining a first radiation pattern. As shown in FIG. 10D, $(x_{1,t}, Y_{1,t}, z_{1,t})$ may represent locations of a satellite 1 at different moments t, $(x_{2,t}, y_{2,t}, z_{2,t})$ may represent locations of a satellite 2 at different moments t, and $(x_{n,t}, y_{n,t}, z_{n,t})$ may represent locations of a satellite n at different moments t. $(x_{0,t}, y_{0,t}, z_{0,t})$ may represent locations of the mobile phone at different moments t. It may be understood that, if the satellite is a high-earth orbit satellite, the satellite and the earth remain in a relatively static state. In other words, at different moments t, a location of the satellite is fixed. In addition, usually, the mobile phone only needs to communicate with one fixed high-earth orbit satellite, in other words, the high-earth orbit satellite can be represented by only $(x_{1,t}, y_{1,t}, z_{1,t})$.

If the satellite is a low-earth orbit satellite, the satellite is in a relative motion state relative to the earth. In other words, locations of the satellite are different at different moments t. In addition, because there are a plurality of low-earth orbit satellites, $(x_{1,t}, y_{1,t}, z_{1,t})$, $(x_{2,t}, y_{2,t}, z_{2,t})$, and $(x_{n,t}, y_{n,t}, z_{n,t})$ may represent a plurality of different low-earth orbit satellites.

The relative location information of the mobile phone and the satellite may be determined based on the location of the satellite and the location of the mobile phone, that is, the relative angle information of the mobile phone and the satellite is calculated. In FIG. 10D, a relative angle between the mobile phone and the satellite 1 may be represented as ($\varphi_{1,t}$, $\theta_{1,t}$), where $\varphi_{1,t}$ represents an azimuth angle between the mobile phone and the satellite at the moment t, and $\theta_{1,t}$ represents an elevation angle between the mobile phone and the satellite at the moment t. Similarly, a relative angle between the mobile phone and the satellite 2 may be represented as ($\varphi_{2,t}$, $\theta_{2,t}$), and a relative angle between the mobile phone and the satellite n may be represented as ($\varphi_{n,t}$, $\theta_{n,t}$).

FIG. 10E is a diagram of a relative angle relationship between a mobile phone and a satellite. As shown in FIG. 10E, an angle between an x-axis and a projection of a connection line between the location of the satellite and the location of the mobile phone on an xoy plane is $\varphi_t$, and an angle between a z-axis and a projection of the connection line between the location of the satellite and the location of the mobile phone on a yoz plane is $\theta_t$.

In addition, ($\varphi_{UED,t}$, $\theta_{UED,t}$) in FIG. 10D represents a posture of the mobile phone at the moment t, where $\varphi_{UED,t}$ represents an azimuth angle of the mobile phone at the moment t, and $\theta_{UED,t}$ represents an elevation angle of the mobile phone at the moment t. Then, based on a relative angle between the mobile phone and the satellite and the posture of the mobile phone at the moment t, and the pre-stored radiation pattern information (not shown in the figure) included in the mobile phone, an integrated decision on a first radiation pattern that needs to be used for communication between the mobile phone and each satellite is made, that is, a decision on a preferred radiation pattern is made.

FIG. 11A is a diagram of a scenario of determining a first radiation pattern. In FIG. 11A, a mobile phone 1101 includes two radiation patterns, that is, the mobile phone 1101 has two corresponding beam coverage areas, for example, a sector area 1102 and a sector area 1103. A shadow part in the figure is an overlapping area of the sector area 1102 and the sector area 1103, and may also be considered as an overlapping area of the two radiation patterns (to intuitively represent the overlapping area, no shadow is added to the sector area 1102 or the sector area 1103, and the shadow part is used to represent the overlapping area).

If a satellite 1104 is located in the overlapping area of the sector area 1102 and the sector area 1103, it indicates that the satellite 1104 may communicate with the mobile phone 1101 based on the sector area 1102 or the sector area 1103, and the mobile phone 1101 needs to further determine a first radiation pattern from the sector area 1102 and the sector area 1103. For example, the satellite 1104 is a low-earth orbit satellite. If the satellite 1104 moves from left to right in a perspective shown in FIG. 11A, when a posture of the mobile phone 1101 does not change, a radiation pattern corresponding to the sector area 1103 may be used as the first radiation pattern because a movement direction of the satellite 1104 is consistent with a direction corresponding to the sector area 1103.

Refer to FIG. 11B. If a satellite $A_1$ is a high-earth orbit satellite (for ease of description, the high-earth orbit satellite is represented as a point $A_1$), when a location and a posture of the mobile phone do not change, a relative location between the satellite and the mobile phone also remains unchanged. In FIG. 11B, a sector area $C_1OB_1$ is an overlapping area of two radiation patterns. Therefore, if the satellite $A_1$ is located in the overlapping area, a radiation pattern with a larger effective beam coverage area in the overlapping area may be used as the first radiation pattern. For example, in FIG. 11B, an effective beam coverage area of the satellite $A_1$ in the overlapping area of the sector area 1102 is a sector area $A_1OB_1$, and an effective beam coverage area of the satellite $A_1$ in the overlapping area of the sector area 1103 is a sector area $A_1OC_1$. Because a range of the sector area $A_1OB_1$ is greater than a range of the sector area $A_1OC_1$, a radiation pattern corresponding to the sector area 1102 may be used as the first radiation pattern.

It may be understood that the foregoing manner of determining the first radiation pattern is merely an example for description, and does not constitute any limitation on this application. For example, the first radiation pattern may be further determined based on a radiation pattern determining model. For example, the relative location information of the mobile phone and the satellite, the posture information of the mobile phone, and the radiation pattern information of the plurality of radiation patterns are input into the radiation pattern determining model, and then a selected first radiation pattern is output based on the radiation pattern model.

In the method, after the first radiation pattern is determined, a first received signal strength corresponding to the first radiation pattern is further determined, and then whether to communicate with the satellite based on the first radiation pattern is determined. This can improve quality of communication between the mobile phone and the satellite, and improve user experience.

It may be understood that satellite in this application includes a high-earth orbit satellite and a low-earth orbit satellite. The following separately uses communication between the mobile phone and the high-earth orbit satellite and communication between the mobile phone and the low-earth orbit satellite as examples to describe in detail the satellite communication method provided in this application based on FIG. 7 and FIG. 9. It may be understood that, for ease of description, the following uses an example in which the mobile phone has two corresponding radiation patterns for description.

Case 1: The satellite is a low-earth orbit satellite.

The following describes in detail a manner in which the mobile phone communicates with the low-earth orbit satellite based on a first radiation pattern on an occasion 1.

FIG. 12A and FIG. 12B are a schematic flowchart of communication between the mobile phone and the low-earth orbit satellite based on the first radiation pattern on the occasion 1. As shown in FIG. 12A and FIG.

12B, the process includes the following steps.

1201: Start.

For example, after detecting a start instruction of a user, the mobile phone may start to determine the satellite, to further perform a subsequent operation like determining the first radiation pattern. For details, refer to the descriptions of step 701. Details are not described herein again.

1202: Is there a GPS signal?

When the mobile phone starts to establish a communication connection to the satellite, the mobile phone may first determine whether a GPS signal can be detected. If a GPS signal cannot be detected, it indicates that location information of the mobile phone cannot be obtained currently, and step 1203 needs to be performed to search for a GPS signal again. If a GPS signal can be detected, it indicates that the electronic device may obtain the location information of the mobile phone based on the GPS signal. This helps subsequently determine the first radiation pattern. Therefore, in this case, step 1204 may be performed.

1203: Search for a GPS signal.

For example, after the mobile phone finds a GPS signal, step 1204 may be performed to determine the first radiation pattern.

1204: Determine, based on first location information of the satellite, at least one initial radiation pattern whose current beam coverage area covers the satellite.

It may be understood that a principle of this step is consistent with the principle of step 902, and details are not described herein again.

1205: Is a quantity of initial radiation patterns one?

It may be understood that, in this embodiment of this application, there may be an overlapping area between two radiation patterns, or there may be no overlapping area between two radiation patterns. If there is one initial radiation pattern, there is no overlapping area between two radiation patterns, or there is an overlapping area between two radiation patterns, but the satellite is located in a non-overlapping area of a radiation pattern. If there is one initial radiation pattern, step 1206 is performed to use the initial radiation pattern as the first radiation pattern. If there are a plurality of initial radiation patterns (in this embodiment, there are two initial radiation patterns, namely, a third radiation pattern and a fourth radiation pattern), it indicates that the satellite is located in an overlapping area of the two radiation patterns, and step 1209 is performed to determine the first radiation pattern from the two initial radiation patterns.

1206: Use the initial radiation pattern as the first radiation pattern.

1207: Determine, based on an RX measurement comparison module 1, whether a first strength condition is met.

For example, a specific determining manner of this step may be as follows: $RSRP_1$ > x dB && ($RSRP_1$ - $RSRP_2$) > y dB?

$RSRP_1$ represents a first received signal strength corresponding to the first radiation pattern in a first area in which the satellite is located, and the first received signal strength is a statistical value, and is obtained by performing weighted averaging on received signals at a plurality of locations included in the first radiation pattern; and x represents a first threshold. $RSRP_2$ represents a second received signal strength of a radiation pattern adjacent to the first radiation pattern in the first area, and y represents a second threshold.

As shown in (2) in FIG. 10A, it may be understood that the radiation pattern 1 and the radiation pattern 2 have an overlapping area and a non-overlapping area corresponding to each of the radiation pattern 1 and the radiation pattern 2. A non-overlapping area of the radiation pattern 1 is a sector area ABCE, and a non-overlapping area of the radiation pattern 2 is a sector area CFHD. If it is determined that the satellite is located in the non-overlapping area (namely, the sector area ABCE) of the radiation pattern 1, the first area may be the sector area ABCE, or may be the sector area ABCD. This is not limited in embodiments of this application. In this case, a radiation pattern corresponding to $RSRP_2$ is the radiation pattern 2.

A manner of determining the first received signal strength and the second received signal strength is not limited in embodiments of this application. For example, the received signal strength may be detected via a sensor inside the electronic device. In addition, the first threshold and the second threshold may be set based on experience, or may be flexibly adjusted based on an actual application scenario. A manner of determining the first threshold and the second threshold is not limited in embodiments of this application.

It may be understood that, when a received signal strength and a transmitted signal strength corresponding to a radiation pattern have reciprocity, the received signal strength may represent the transmitted signal strength. Therefore, in this embodiment of this application, if a received signal strength corresponding to the first radiation pattern is greater than the first threshold, and a difference between the first received signal strength and the second received signal strength is greater than the second threshold, it indicates that a transmitted signal strength corresponding to the first radiation pattern meets a strength requirement. In this case, step 1208 may be performed to establish a communication connection to the satellite based on the first radiation pattern. In this way, it can be ensured that the first received signal strength of the first radiation pattern is greater than a received signal strength of a second radiation pattern in the first area, and communication quality can be ensured when communication with the satellite is performed based on the first radiation pattern. The first threshold may be referred to as an absolute threshold of the first radiation pattern. The second threshold may also be referred to as a relative threshold of the first radiation pattern.

If the first strength condition is not met, prompt information may be displayed to prompt the user that the connection to the satellite cannot be established currently and to confirm whether the user attempts to establish a connection again. If the user determines to attempt to establish a connection again, a user guide diagram may be displayed to prompt the user to change a location or a posture of the mobile phone, and then step 1204 is performed again.

FIG. 13 is a diagram of a mobile phone interface change when the mobile phone cannot establish a communication connection to the satellite. For example, if the first received signal strength does not meet the strength condition, as shown in FIG. 13, the mobile phone displays a prompt interface 1301 including a prompt box 1302, and prompt information in the prompt box 1302 is, for example, "Failed to establish a connection to the satellite currently. Are you sure you want to establish a connection again?". The prompt box 1302 further includes an "OK" control 1303 and a "Cancel" control 1304. In response to a trigger operation of the "Cancel" control 1304, the mobile phone ends the process of establishing the communication connection. In response to a trigger operation of the "OK" control 1303, the mobile phone displays a guide interface 1305. The guide interface 1305 may display guide information 1306, for example, "Please slowly tilt the mobile phone to the left", and a guide diagram 1307 (namely, a user guide diagram).

It may be understood that, in this step, the first received signal strength and the second received signal strength may be separately measured for a plurality of times at a fixed time interval, to obtain a plurality of first received signal strengths and a plurality of second received signal strengths. When the plurality of first received signal strengths are all greater than the first threshold, and differences between the plurality of first signal received strengths and the plurality of second received signal strengths are all greater than the second threshold, step 1208 is performed. Similarly, if at least one of the plurality of first received signal strengths is not greater than the first threshold, or at least one of the differences between the plurality of the first received signal strength and the plurality of the second received signal strength is not greater than the second threshold, content shown in FIG. 13 is performed.

1208: Establish the communication connection to the satellite based on the first radiation pattern.

1209: Determine the first radiation pattern from the two initial radiation patterns based on a motion direction of the satellite relative to the mobile phone.

Content of this step has been described in detail above, and details are not described herein again.

1210: Determine, based on an RX measurement comparison module 2, whether a first strength condition is met.

For example, a specific determining manner of this step may be as follows: $RSRP_1 > x$ dB ?

$RSRP_1$ represents the first received signal strength corresponding to the first radiation pattern in the first area in which the satellite is located. As shown in (2) in FIG. 10A, it may be understood that if it is determined that the satellite is located in an overlapping area (namely, a sector area ECD) of the radiation pattern 1 and the radiation pattern 2, the first area is the sector area ECD. If the first received signal strength corresponding to the first radiation pattern in the first area is greater than the first threshold, step 1208 is performed to establish the communication connection to the satellite based on the first radiation pattern. In this way, it can be ensured that the first received signal strength corresponding to the first radiation pattern in the first area meets a strength requirement, and communication quality can be ensured when communication with the satellite is performed based on the first radiation pattern.

If the first strength condition is not met, prompt information may be displayed to prompt the user that the connection to the satellite cannot be established currently and to confirm whether the user attempts to establish a connection again. If the user determines to attempt to establish a connection again, a user guide diagram may be displayed to prompt the user to change a location or a posture of the mobile phone, and then step 1204 is performed again.

For a diagram of a mobile phone interface change in this case, refer to the content shown in FIG. 13. Details are not described herein again.

In some embodiments, if it is determined, based on the first location information of the satellite, that there is no second radiation pattern whose beam coverage area covers the satellite, the mobile phone may also display content shown in FIG. 13, to determine to re-establish a connection or end the connection establishment.

In some other embodiments, in this application, different confidences may be further set for first radiation patterns obtained in different cases, and then whether to communicate with the satellite based on the first radiation pattern is comprehensively considered by combining the confidences and the received signal strength.

For example, because a sensor that measures the location information, the posture information, and the like has a specific error, different error values may correspond to different confidences of the first radiation pattern. For example, if an error of the sensor is low, it indicates that accuracy of the determined first radiation pattern is high, and a high confidence of the first radiation pattern may be set. Similarly, if the error of the sensor is high, it indicates that the accuracy of the first radiation pattern is low, and a low confidence of the first radiation pattern may be set.

In addition, when there is an overlapping area between two radiation patterns, the confidence of the first radiation pattern may be further determined based on the error of the sensor and whether the satellite is currently located in the overlapping area. For example, when errors of the sensor are the same, if the satellite is located in the overlapping area, the confidence corresponding to the first radiation pattern is high; and if the satellite is located in the non-overlapping area, the confidence corresponding to the first radiation pattern is low.

In this case, for a strength determining condition of the received signal strength, refer to the following formula (1).

$$RSRP_1 - (1 - n) * RSRP_2 > z\ dB \quad \text{Formula (1)}$$

n represents the confidence (namely, a first confidence) of the first radiation pattern, and z represents a strength threshold (namely, a fourth threshold). In this case, the strength threshold may be flexibly adjusted based on an actual application scenario. This is not limited in this application.

In other words, in this embodiment, regardless of whether there is one or more initial radiation patterns, after determining the first radiation pattern, the mobile phone may determine, according to the foregoing formula (1), whether the first received signal strength corresponding to the first radiation pattern meets the strength condition.

In some other embodiments, in step 1205, if it is determined that there are two initial radiation patterns, the first radiation pattern may be determined based on received signal strengths of the two initial radiation patterns. For example, it is determined whether received signal strengths respectively corresponding to the two initial radiation patterns in the overlapping area are both greater than a third threshold, and if the received signal strengths respectively corresponding to the two initial radiation patterns in the overlapping area are both greater than the third threshold, an initial radiation pattern with a higher received signal strength is used as the first radiation pattern. If a received signal strength of only one initial radiation pattern is greater than the third threshold, the initial radiation pattern is used as the first radiation pattern. If received signal strengths of the two initial radiation patterns are not greater than the third threshold, content shown in FIG. 13 is performed.

In the foregoing method, after determining the first radiation pattern, the mobile phone further determines whether the first received signal strength corresponding to the first radiation pattern meets the first strength condition, and the first strength condition varies with a location of the satellite. In this manner, the first radiation pattern for communication with the satellite is finally determined through two times of determining, so that accuracy of the first radiation pattern is improved, and communication quality is improved.

FIG. 14 is another schematic flowchart of communication between a mobile phone and a low-earth orbit satellite based on a first radiation pattern on an occasion 1. As shown in FIG. 14, the process includes the following steps.

1401: Start.

1402: Is there a GPS signal?

It may be understood that if a GPS signal can be found, step 1404 is performed; or if a GPS signal cannot be found, step 1403 is performed.

1403: Search for a GPS signal.

It may be understood that principles of the foregoing steps 1401 to 1403 are roughly the same as those of the content in the foregoing steps 1201 to 1203, and details are not described herein again.

1404: Determine relative location relationships between an antenna beam center and a plurality of satellites.

It may be understood that a manner of determining the relative location relationship between the antenna beam center and each satellite has been described above, and details are not described herein again. In addition, this step may be implemented based on a relative location relationship determining module inside the mobile phone.

1405: Determine, based on the relative location relationships, posture information of the mobile phone, and radiation pattern information, at least one satellite identifier of at least one satellite that meets a location condition.

It may be understood that the satellite that meets the location condition may be a satellite located inside coverage areas of a plurality of radiation patterns of the mobile phone.

1406: Detect received signal strengths between each radiation pattern of the mobile phone and different satellites, and respectively use a satellite and a radiation pattern with a highest received signal strength as a to-be-communicated satellite and a first radiation pattern respectively.

It may be understood that, when the mobile phone does not communicate with the satellite based on the radiation pattern, the mobile phone may detect, based on an internal sensor, a strength that is of a signal sent by each satellite and that is received in a beam coverage area of each radiation pattern of the mobile phone, for example, a broadcast signal sent by the satellite.

For example, the mobile phone has two corresponding radiation patterns: a radiation pattern A and a radiation pattern B, and has three satellites C, D, and E that meet the location condition. In this case, the mobile phone may separately detect a signal strength between the radiation pattern A and each of the satellites C, D, and E, to obtain $RSRP_{AC}$, $RSRP_{AD}$, $RSRP_{AE}$. Similarly, $RSRP_{BC}$, $RSRP_{BD}$, $RSRP_{BE}$ may also be obtained by detecting a signal strength between the radiation pattern B and each of the satellites C, D, and E. Then, a satellite corresponding to a largest value in $RSRP_{AC}$, $RSRP_{AD}$, $RSRP_{AE}$, $RSRP_{BC}$, $RSRP_{BD}$, $RSRP_{BE}$ is selected as the to-be-communicated satellite, and a radiation pattern corresponding to the largest value is selected as the first radiation pattern. In other words, the mobile phone may subsequently communicate with the to-be-communicated satellite based on the first radiation pattern.

For example, this step may be implemented by a satellite and radiation pattern determining module inside the mobile phone.

1407: Establish a communication connection to the to-be-communicated satellite based on the first radiation pattern.

The following describes in detail a manner in which a mobile phone communicates with a low-earth orbit satellite based on a first radiation pattern on an occasion 2. FIG. 15A and FIG. 15B are a schematic flowchart of communication between the mobile phone and the low-earth orbit satellite based on the first radiation pattern on the occasion 2. As shown in FIG. 15A and FIG. 15B, the process includes the following steps.

1501: Start.

In this embodiment of this application, the occasion 2 for re-determining the first radiation pattern may be a posture change of the mobile phone, a location change of the mobile phone relative to the satellite, poor quality of a satellite communication signal when the mobile phone has communicated with the satellite based on one radiation pattern, or may be disconnection between the mobile phone and the satellite, or the like. For details, refer to the content shown in FIG. 7. Details are not described herein again.

1502: Determine, based on first location information of the satellite, at least one initial radiation pattern whose current beam coverage area covers the satellite.

It may be understood that a principle of this step is consistent with the principle of step 902, and details are not described herein again.

1503: Is a quantity of initial radiation patterns one?

It may be understood that, in this embodiment of this application, there may be an overlapping area between two radiation patterns, or there may be no overlapping area between two radiation patterns. If there is one initial radiation pattern, step 1504 is performed to use the initial radiation pattern as the first radiation pattern. If there are a plurality of initial radiation patterns (in this embodiment, there are two initial radiation patterns), it indicates that the satellite is located in an overlapping area of the two radiation patterns, and step 1507 is performed to determine the first radiation pattern from the two initial radiation patterns.

1504: Use the initial radiation pattern as the first radiation pattern.

1505: Determine, based on an RX measurement comparison module 1, whether a first strength condition is met.

If the first strength condition is met, step 1506 may be performed to establish a communication connection to the satellite based on the first radiation pattern. If the first strength condition is not met, the mobile phone may display content shown in FIG. 13.

1506: Establish the communication connection to the satellite based on the first radiation pattern.

1507: Determine the first radiation pattern from the two initial radiation patterns based on a motion direction of the satellite relative to the mobile phone.

It may be understood that principles of steps 1504 to 1507 are the same as those of steps 1206 to 1209. Details are not described herein again.

1508: Is the first radiation pattern the same as a radiation pattern currently used for communication between the mobile phone and the satellite?

It may be understood that the radiation pattern currently used for communication between the mobile phone and the satellite is the fifth radiation pattern described above.

If the first radiation pattern is the same as the radiation pattern currently used for communication between the mobile phone and the satellite, the radiation pattern is not switched, and step 1502 is performed again. If the first radiation pattern is not the same as the radiation pattern currently used for communication between the mobile phone and the satellite, step 1509 is performed to determine whether a first received signal strength of the first radiation pattern meets the first strength condition.

1509: Determine, based on an RX measurement comparison module 2, whether a first strength condition is met.

If the first strength condition is met, step 1506 is performed to establish the communication connection to the satellite based on the first radiation pattern. If the first strength condition is not met, the mobile phone may display content shown in FIG. 13.

It may be understood that, similar to the principle shown in FIG. 12A and FIG. 12B, in some other embodiments, if it is determined that there are two initial radiation patterns, the first radiation pattern may be determined based on received signal strengths of the two initial radiation patterns. For example, it is determined whether received signal strengths respectively corresponding to the two initial radiation patterns in the overlapping area are both greater than a third threshold, and if the received signal strengths respectively corresponding to the two initial radiation patterns in the overlapping area are both greater than the third threshold, an initial radiation pattern with a higher received signal strength is used as the first radiation pattern. If a received signal strength of only one initial radiation pattern is greater than the third threshold, the initial radiation pattern is used as the first radiation pattern. If received signal strengths of the two initial radiation patterns are not greater than the third threshold, content shown in FIG. 13 is performed.

It may be understood that, in the foregoing manner of communication with the low-earth orbit satellite based on the first radiation pattern on the occasion 2, only radiation pattern switching is involved, and satellite switching is not involved.

For example, when a location of the mobile phone does not change, because the low-earth orbit satellite moves relative to the mobile phone, when the satellite moves out of a visible range of the mobile phone (for example, moves to another hemisphere), the mobile phone cannot communicate with the low-earth orbit satellite. In this case, the mobile phone may determine, based on a target low-earth orbit satellite delivered by a satellite network, that the current beam coverage area can cover a first radiation pattern of the target low-earth orbit satellite, and then establish a communication connection to the target low-earth orbit satellite based on the first radiation pattern.

As shown in FIG. 6, both the low-earth orbit satellite 503 and the low-earth orbit satellite 601 move from left to right. When the low-earth orbit satellite 503 is about to move out of a visible range of the mobile phone 201, the mobile phone 201 may receive an identifier that corresponds to the low-earth orbit satellite 601 and that is delivered by the satellite network, to indicate that the mobile phone 201 may prepare to establish a communication connection to the low-earth orbit satellite 601. Then, the mobile phone 201 may determine that a beam coverage area covers a first radiation pattern of the low-earth orbit satellite 601, and establish a communication connection to the low-earth orbit satellite 601 based on the first radiation pattern.

The following describes in detail a manner in which the mobile phone communicates with the target low-earth orbit satellite based on the first radiation pattern in this case. FIG. 16 is a schematic flowchart of communication between the mobile phone and the target low-earth orbit satellite based on the first radiation pattern on the occasion 2. As shown in FIG. 16, the process includes the following steps.

1601: Start.

In this embodiment, if the mobile phone receives the target low-earth orbit satellite delivered by the satellite network, the mobile phone may start to determine the first radiation pattern.

1602: Determine, based on first location information of the target low-earth orbit satellite, at least one initial radiation pattern whose current beam coverage area covers the target low-earth orbit satellite.

1603: Is a quantity of initial radiation patterns one?

If there is one initial radiation pattern, step 1604 is performed; or if the quantity of initial radiation patterns is not one, step 1607 is performed to determine a first radiation pattern from a plurality of initial radiation patterns.

1604: Use the initial radiation pattern as the first radiation pattern.

1605: Determine, based on an RX measurement comparison module 1, whether a first strength condition is met.

If the first strength condition is met, step 1606 may be performed to establish a communication connection to the satellite based on the first radiation pattern. If the first strength condition is not met, the mobile phone may display content shown in FIG. 13.

1606: Establish the communication connection to the satellite based on the first radiation pattern.

1607: Determine the first radiation pattern from two initial radiation patterns based on a motion direction of the satellite relative to the mobile phone.

It may be understood that principles of steps 1602 to 1607 are the same as those of steps 1204 to 1209. Details are not described herein again.

1608: Determine, based on an RX measurement comparison module 2, whether a first strength condition is met.

If the first strength condition is met, step 1606 is performed to establish the communication connection to the satellite based on the first radiation pattern. If the first strength condition is not met, the mobile phone may display content shown in FIG. 13.

It may be understood that, similar to the principle shown in FIG. 12A and FIG. 12B, in some other embodiments, if it is determined that there are two initial radiation patterns, the first radiation pattern may be determined based on received signal strengths of the two initial radiation patterns. For example, it is determined whether received signal strengths respectively corresponding to the two initial radiation patterns in an overlapping area are both greater than a third threshold, and if the received signal strengths respectively corresponding to the two initial radiation patterns in the overlapping area are both greater than the third threshold, an initial radiation pattern with a higher received signal strength is used as the first radiation pattern. If a received signal strength of only one initial radiation pattern is greater than the third threshold, the initial radiation pattern is used as the first radiation pattern. If received signal strengths of the two initial radiation patterns are not greater than the third threshold, content shown in FIG. 13 is performed.

Case 2: The satellite is a high-earth orbit satellite.

It may be understood that a process in which the mobile phone communicates with a high-earth orbit satellite based on the first radiation pattern on the occasion 1 is basically consistent with the process shown in FIG. 12A and FIG. 12B. For details, refer to the foregoing descriptions of FIG. 12A and FIG. 12B. It should be noted that, because the high-earth orbit satellite is stationary relative to the earth, if a location of the mobile phone does not change, relative location information of the high-earth orbit satellite and the mobile phone does not change. Therefore, when a first radiation pattern is determined from two initial radiation patterns, a radiation pattern with a larger effective beam coverage area may be used as the first radiation pattern. In this case, for a specific manner of determining the first radiation pattern, refer to the foregoing related descriptions of FIG. 11B. Details are not described herein again.

In addition, because the high-earth orbit satellite is stationary relative to the earth, satellite switching in FIG. 16 is usually not involved. A process in which the mobile phone communicates with a high-earth orbit satellite based on the first radiation pattern on the occasion 2 is basically consistent with content shown in FIG. 15A and FIG. 15B. For details, refer to related descriptions in FIG. 15A and FIG. 15B.

The foregoing describes the method provided in embodiments of this application by using only communication between a mobile phone and a satellite as an example. It may be understood that the manner of selecting one first radiation pattern from a plurality of radiation patterns in this application may also be applied to communication between a mobile phone and a base station, and principles are the same. This is not limited in embodiments of this application.

According to the satellite communication method provided in embodiments of this application, regardless of whether the mobile phone communicates with a high-earth orbit satellite or a low-earth orbit satellite, because the mobile phone has a plurality of corresponding radiation patterns, a preferred first radiation pattern whose current beam coverage area covers the satellite is selected from the plurality of radiation patterns based on current location information and current posture information of the mobile phone and first location information of the satellite. In comparison with a case in which there is only one radiation pattern, the mobile phone may directly determine the first radiation pattern whose beam coverage area covers the satellite, and can communicate with the satellite without changing a location or a posture, thereby improving convenience of a communication process and improving user experience.

In addition, in the method, after the first radiation pattern is determined, a received signal strength corresponding to the first radiation pattern is further determined, and communication with the satellite is performed based on the first radiation pattern only when the received signal strength meets a strength condition. In this way, quality of communication between the mobile phone and the satellite can be ensured, and user experience can be improved.

In some embodiments, an embodiment of this application further provides a computer-readable medium. The readable medium stores instructions. When the instructions are executed on a computer, the computer is enabled to perform the satellite communication method described in the foregoing embodiments.

In some embodiments, an embodiment of this application further provides an electronic device. The electronic device includes one or more processors and one or more memories. The one or more memories store one or more programs. When the one or more programs are executed by the one or more processors, the electronic device is enabled to perform the satellite communication method described in the foregoing embodiments.

In some embodiments, an embodiment of this application further provides a computer program product, including executable instructions. The executable instructions are stored in a readable storage medium. At least one processor of an electronic device may read the executable instructions from the readable storage medium, and the at least one processor executes the executable instructions, so that the electronic device implements the satellite communication method described in the foregoing embodiments.

FIG. 17 is a diagram of a structure of an electronic device according to an embodiment of this application. As shown in FIG. 17, the electronic device may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and the like.

It may be understood that the structure illustrated in this embodiment of the present invention does not constitute a specific limitation on the electronic device. In some other embodiments of this application, the electronic device may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the foregoing memory. This avoids repeated access, reduces waiting time of the processor 110, and improves system efficiency. The processor may be configured to perform the satellite communication method mentioned in this application.

The interface 120 for external memory may be configured to connect to an external memory card, for example, a micro SD card, to extend a storage capability of the electronic device. The external memory card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data or an address book) and the like created when the electronic device is used. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications of the electronic device and data processing.

The SIM card interface 195 is configured to connect to a SIM card.

It may be understood that, as used in this specification, a term "module" may refer to or include an application-specific integrated circuit (ASIC), an electronic circuit, a processor (shared, dedicated, or group) and/or a memory that executes one or more software or firmware programs, combined logic circuits, and/or another appropriate hardware component that provides a described function, or may be a part of these hardware components.

It can be understood that, in embodiments of this application, a processor may be a microprocessor, a digital signal processor, a microcontroller, or the like, and/or any combination thereof. According to another aspect, the processor may be a single-core processor, a multi-core processor, or the like, and/or any combination thereof.

Embodiments disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code can be applied to input instructions to perform the functions described in this application and generate output information. The output information can be applied to one or more output devices in a known manner. For a purpose of this application, a processing system includes any system having a processor like a digital signal processor (DSP), a microcontroller, an application-specific integrated circuit (ASIC), or a microprocessor.

The program code may be implemented in a high-level programming language or an object-oriented programming language to communicate with the processing system. The program code can also be implemented in an assembly language or a machine language when needed. Actually, the mechanisms described in this application are not limited to a scope of any particular programming language. In any case, the language may be a compiled language or an interpretive language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed over a network or through another computer-readable medium. Therefore, the machine-readable medium may include any mechanism for storing or transmitting information in a machine (for example, a computer)-readable form, including but not limited to a floppy disk, a compact disc, an optical disc, read-only memories (CD-ROMs), a magnetic optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the internet. Therefore, the machine-readable medium includes any type of machine-readable medium appropriate for storing or transmitting electronic instructions or information in a machine (for example, a computer)-readable form.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings.

In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that, in the examples and the specification of this patent, relational terms such as first and second are only used to distinguish one entity or operation from another entity or operation, and do not necessarily require or imply that any actual relationship or sequence exists between these entities or operations. Moreover, the terms "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element.

Although this application has been illustrated and described with reference to some preferred embodiments of this application, a person of ordinary skill in the art should understand that various changes may be made to this application in terms of form and details without departing from the scope of this application.

## Claims

1. A satellite communication method, applied to an electronic device, wherein the method comprises:

    obtaining first location information of a satellite;
    selecting, based on the first location information, a first radiation pattern whose current beam coverage area covers the satellite, from a plurality of radiation patterns of the electronic device; and
    communicating with the satellite based on the first radiation pattern.

2. The method according to claim 1, wherein the current beam coverage area is determined based on current location information and current posture information of the electronic device.

3. The method according to claim 2, wherein the plurality of radiation patterns are obtained via a plurality of physical antennas inside the electronic device, or are obtained by changing a plurality of different antenna matching circuits of one physical antenna inside the electronic device.

4. The method according to claim 3, wherein the communicating with the satellite based on the first radiation pattern comprises:
    based on a first received signal strength corresponding to the first radiation pattern meeting a first strength condition, communicating with the satellite.

5. The method according to claim 4, wherein the method further comprises:
    based on the first received signal strength corresponding to the first radiation pattern not meeting the first strength condition, displaying a user guide diagram, wherein the user guide diagram is used to prompt a user to rotate and/or move the electronic device.

6. The method according to claim 5, wherein

    when the satellite is located in only the current beam coverage area of the first radiation pattern, the first strength condition is that a first received signal strength of the first radiation pattern in a first area is greater than a first threshold, and a difference between the first received signal strength and a second received signal strength of a second radiation pattern in the plurality of radiation patterns in the first area is greater than a second threshold, wherein the first area is determined based on the current beam coverage area; and
    when the satellite is located in an overlapping area of the first radiation pattern and the second radiation pattern, the first strength condition is that the first received signal strength is greater than the first threshold.

7. The method according to claim 3, wherein the plurality of radiation patterns comprise a third radiation pattern and a fourth radiation pattern that have an overlapping area; and
    the selecting, based on the first location information, the first radiation pattern whose current beam coverage area covers the satellite, from the plurality of radiation patterns of the electronic device, comprises:

when the satellite is located in the overlapping area, determining that both a current beam coverage area of the third radiation pattern and a current beam coverage area of the fourth radiation pattern cover the satellite; and
selecting a first radiation pattern from the third radiation pattern and the fourth radiation pattern based on a movement direction of the satellite.

**8.** The method according to claim 7, wherein the selecting a first radiation pattern from the third radiation pattern and the fourth radiation pattern based on the movement direction of the satellite comprises:
based on the satellite moving from a first direction to a second direction, and the third radiation pattern being located in the first direction of the fourth radiation pattern, using the fourth radiation pattern as the first radiation pattern.

**9.** The method according to claim 3, wherein the plurality of radiation patterns comprise a third radiation pattern and a fourth radiation pattern that have an overlapping area; and
the selecting, the first radiation pattern whose current beam coverage area covers the satellite, from the plurality of radiation patterns of the electronic device based on the first location information, comprises:

when the satellite is located in the overlapping area, determining that both a current beam coverage area of the third radiation pattern and a current beam coverage area of the fourth radiation pattern cover the satellite;
based on both a received signal strength of the third radiation pattern in the overlapping area and a received signal strength of the fourth radiation pattern in the overlapping area greater than a third threshold, using a radiation pattern with a higher received signal strength in the third radiation pattern and the fourth radiation pattern as the first radiation pattern; and
based on the received signal strength of only one of the third radiation pattern and the fourth radiation pattern greater than the third threshold, using the radiation pattern whose received signal strength is greater than the third threshold as the first radiation pattern.

**10.** The method according to claim 9, wherein the method further comprises:
based on both the received signal strength of the third radiation pattern and the received signal strength of the fourth radiation pattern not greater than the third threshold, displaying a user guide diagram, wherein the user guide diagram is used to prompt a user to rotate and/or move the electronic device.

**11.** The method according to claim 3, wherein the method further comprises:

based on the first radiation pattern being selected, determining whether the first radiation pattern is the same as a fifth radiation pattern that is in the plurality of radiation patterns and that is currently used for communication with the satellite, wherein the first radiation pattern and the fifth radiation pattern have an overlapping area;
based on the first radiation pattern different from the fifth radiation pattern, determining whether a first received signal strength corresponding to the first radiation pattern in a first area meets a second strength condition; and
based on the first received signal strength meeting the second strength condition, communicating with the satellite based on the first radiation pattern, wherein
the second strength condition is that the first received signal strength is greater than a first threshold.

**12.** The method according to claim 4, wherein the first radiation pattern has a corresponding first confidence, and
the first strength condition is:

a difference between a correction value of a first received signal strength of the first radiation pattern in a first area and a correction value of a second received signal strength of a second radiation pattern in the plurality of radiation patterns in the first area is greater than a fourth threshold, wherein
the correction value of the second received signal strength is determined based on a product of the second received signal strength and a second confidence, and a sum of the first confidence and the second confidence is 1.

**13.** The method according to claim 12, wherein the first confidence is determined based on accuracy of the first location information, and accuracy of both the current location information and the current posture information of the electronic device.

**14.** The method according to claim 13, wherein the plurality of radiation patterns comprise a third radiation pattern and a fourth radiation pattern that have an overlapping area; and
the first confidence is further determined based on the overlapping area.

**15.** The method according to claim 3, wherein the plurality of radiation patterns comprise a third radiation pattern and a fourth radiation pattern that have an overlapping area; and

the selecting, the first radiation pattern whose current beam coverage area covers the satellite, from the plurality of radiation patterns of the electronic device based on the first location information, comprises:

among the third radiation pattern and the fourth radiation pattern, using a radiation pattern corresponding to a larger effective beam coverage area comprised in the overlapping area as the first radiation pattern.

**16.** An electronic device, comprising one or more processors and one or more memories, wherein the one or more memories store one or more programs, and when the one or more programs are executed by the one or more processors, the electronic device is enabled to perform the communication method according to any one of claims 1 to 15.

**17.** A computer-readable storage medium, wherein the readable storage medium stores instructions, and when the instructions are executed on a computer, the computer is enabled to perform the satellite communication method according to any one of claims 1 to 15.

**18.** A computer program product, comprising computer instructions, wherein when the computer instructions are run on an electronic device, the electronic device is enabled to perform the satellite communication method according to any one of claims 1 to 15.

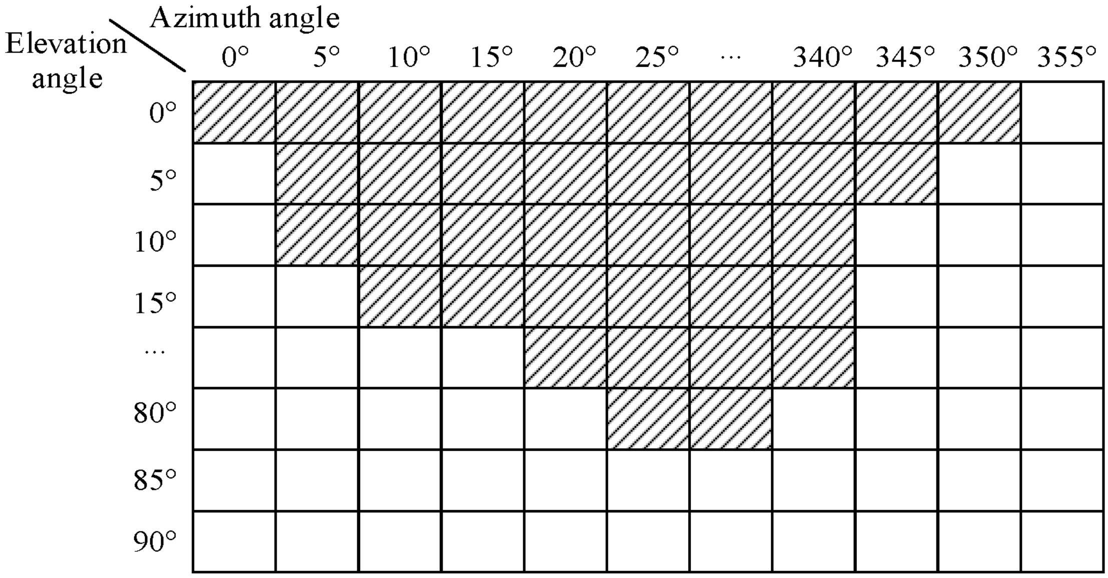
Azimuth angle
Elevation angle
0°
5°
10°
15°
20°
25°
...
340°
345°
350°
355°
0°
5°
10°
15°
...
80°
85°
90°

FIG. 1

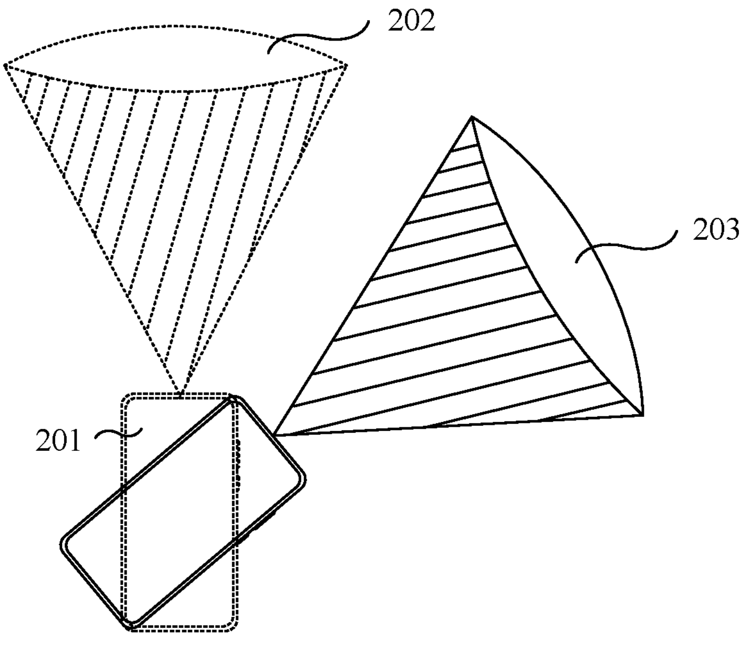
202
203
201

FIG. 2

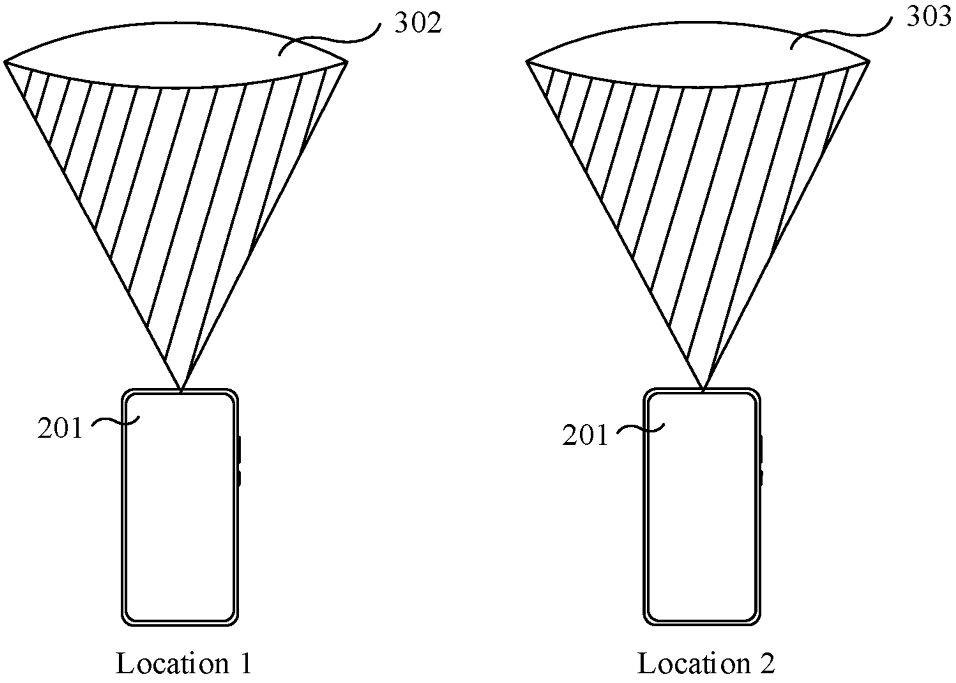


FIG. 3

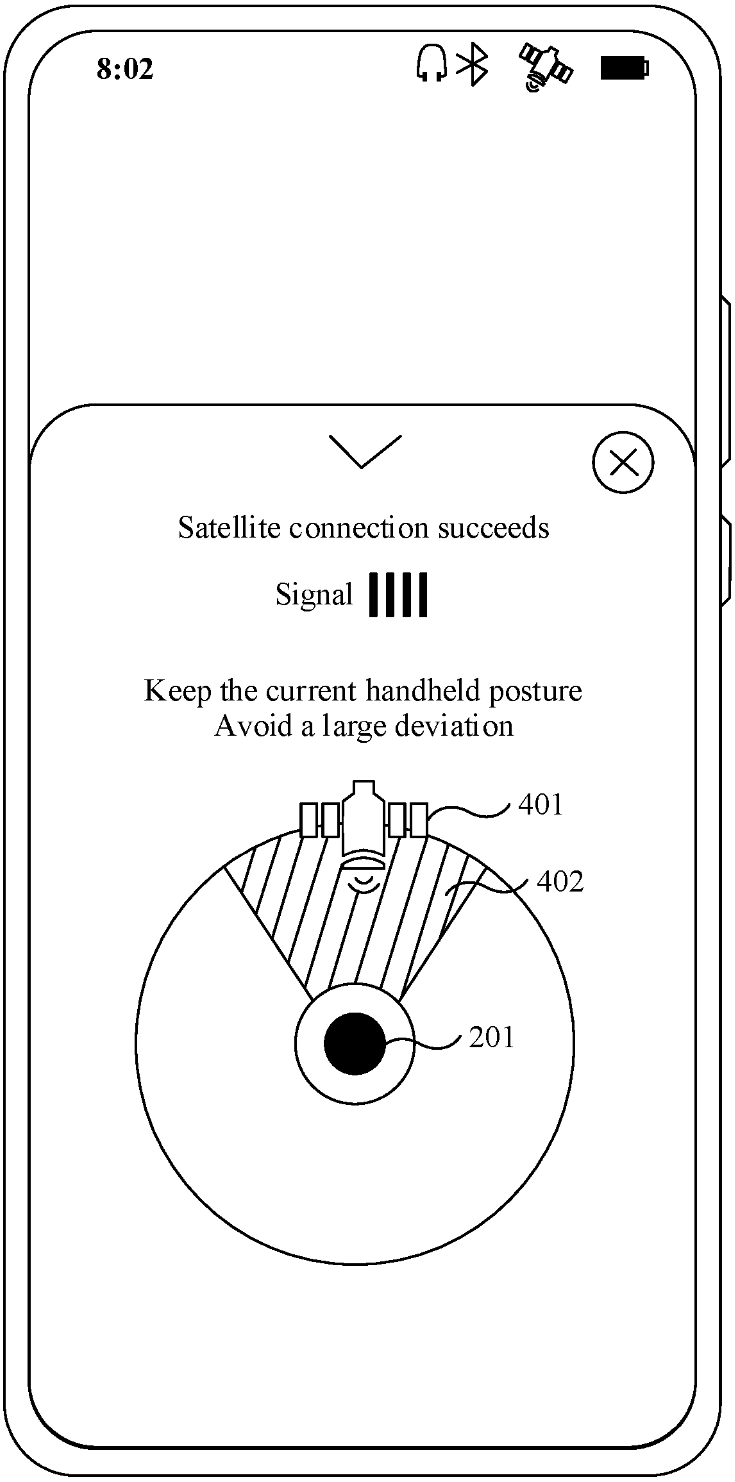
8:02
Satellite connection succeeds
Signal
Keep the current handheld posture
Avoid a large deviation
401
402
201

FIG. 4

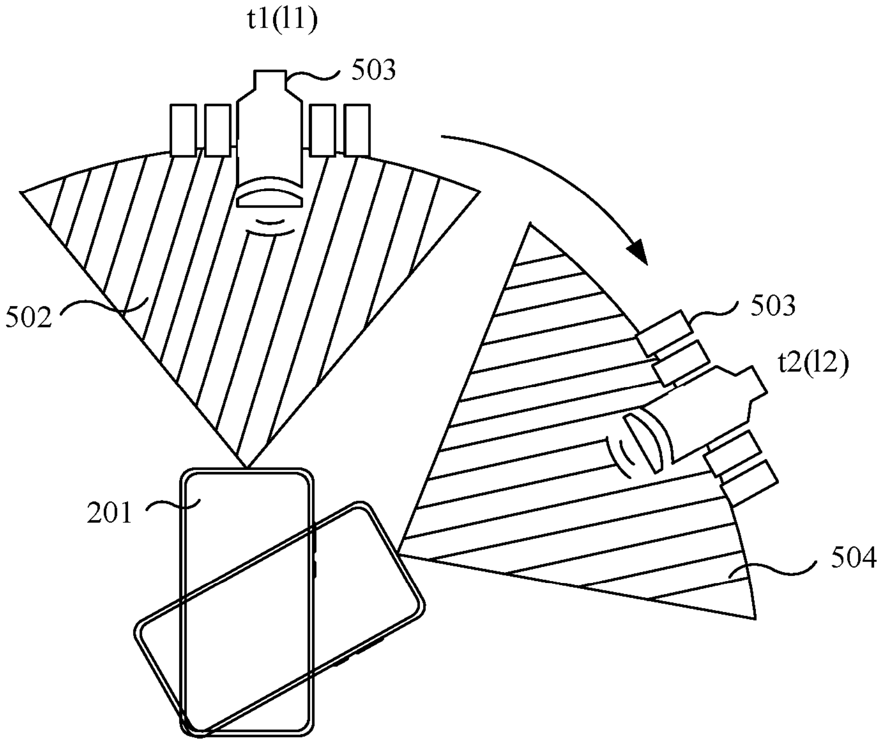
t1(l1)
503
502
503
t2(l2)
201
504

FIG. 5

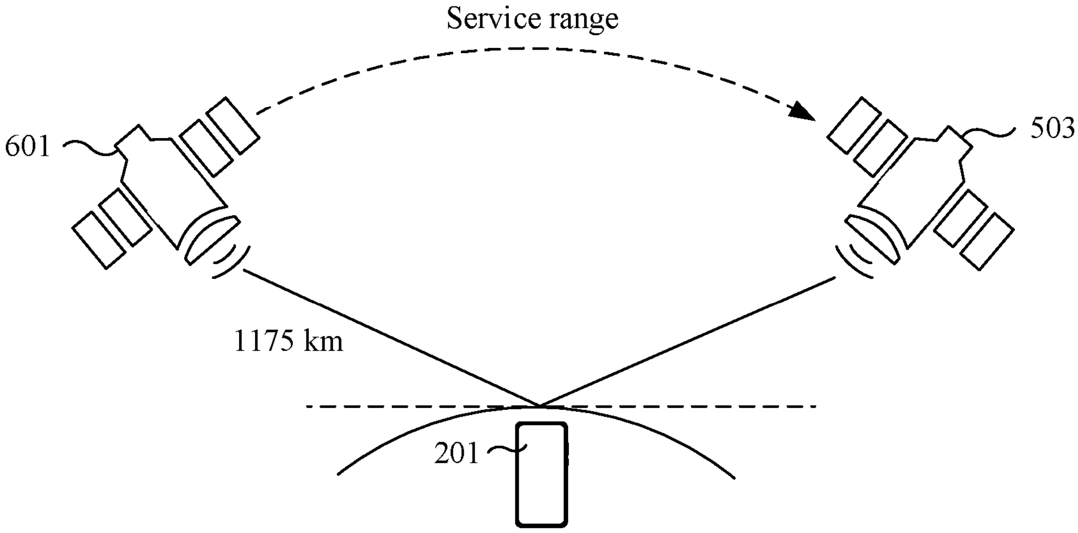
Service range
601
503
1175 km
201

FIG. 6

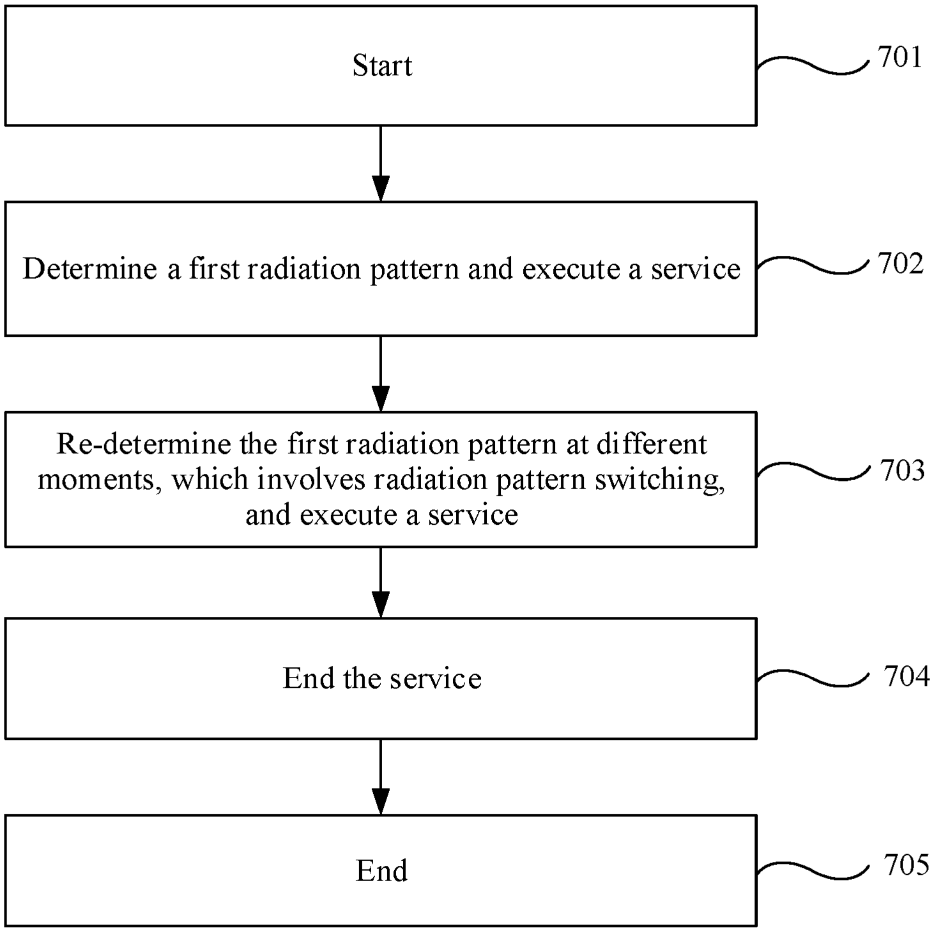
Start
701
Determine a first radiation pattern and execute a service
702
Re-determine the first radiation pattern at different moments, which involves radiation pattern switching, and execute a service
703
End the service
704
End
705

FIG. 7

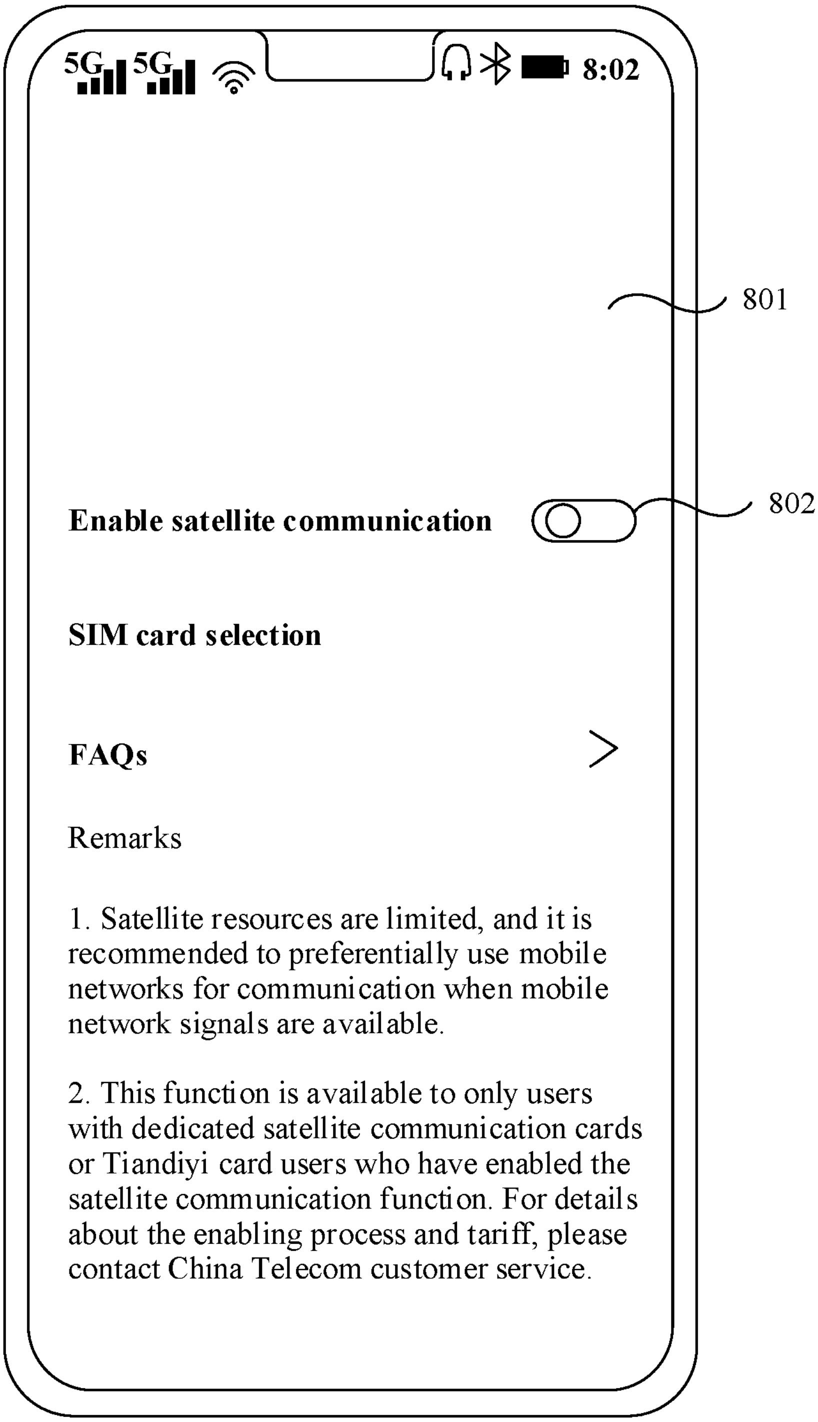
5G 5G
8:02
801
802
Enable satellite communication
SIM card selection
FAQs
Remarks
1. Satellite resources are limited, and it is recommended to preferentially use mobile networks for communication when mobile network signals are available.
2. This function is available to only users with dedicated satellite communication cards or Tiandiyi card users who have enabled the satellite communication function. For details about the enabling process and tariff, please contact China Telecom customer service.

FIG. 8

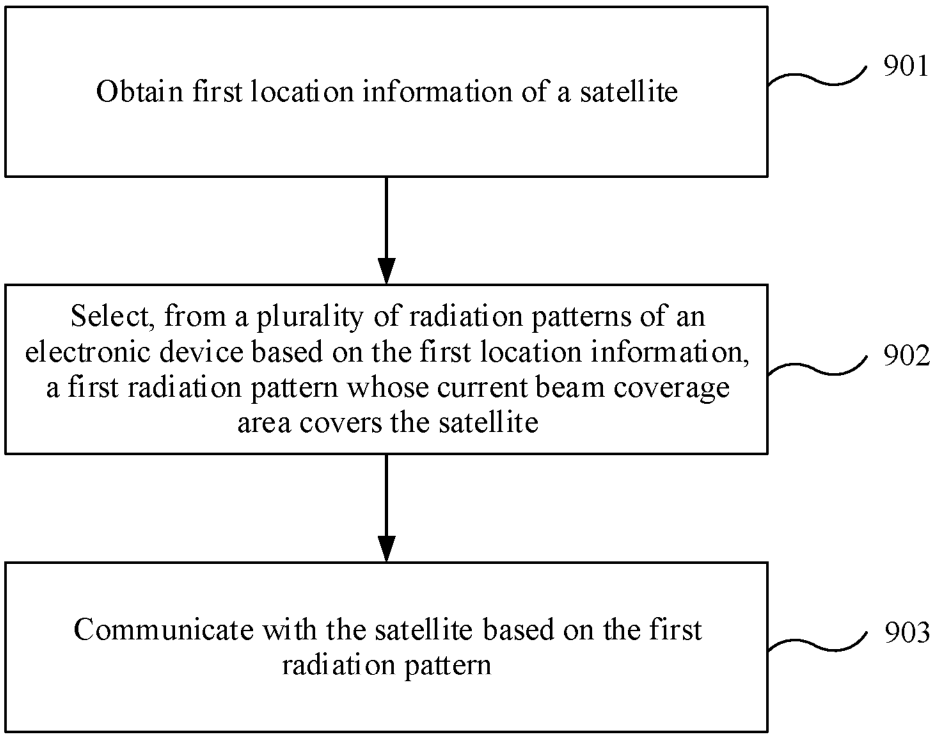
Obtain first location information of a satellite
901
Select, from a plurality of radiation patterns of an electronic device based on the first location information, a first radiation pattern whose current beam coverage area covers the satellite
902
Communicate with the satellite based on the first radiation pattern
903

FIG. 9

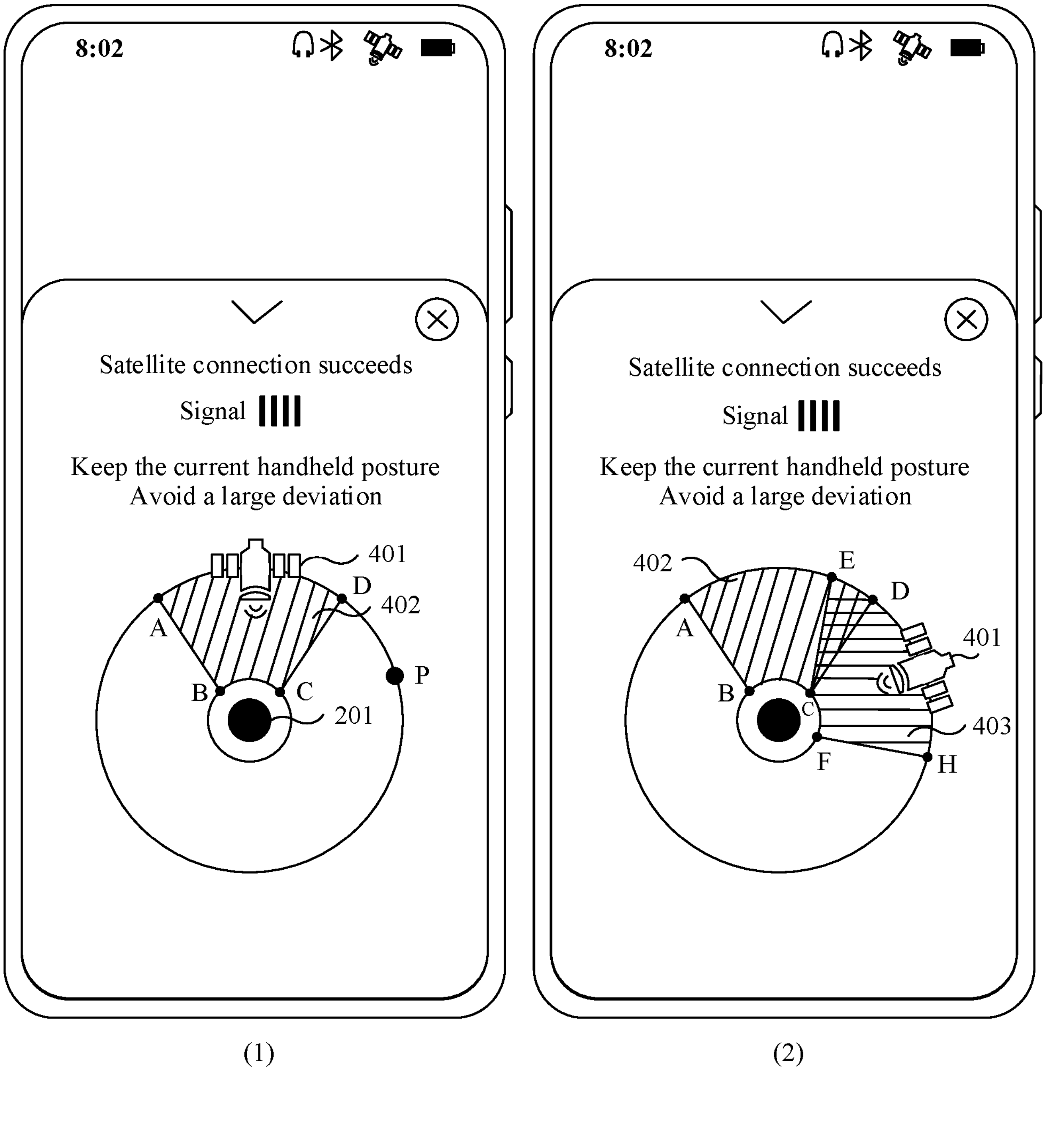
8:02
Satellite connection succeeds
Signal
Keep the current handheld posture
Avoid a large deviation
401
402
A
B
C
D
P
201
(1)
8:02
Satellite connection succeeds
Signal
Keep the current handheld posture
Avoid a large deviation
402
E
D
401
A
B
C
403
F
H
(2)

FIG. 10A

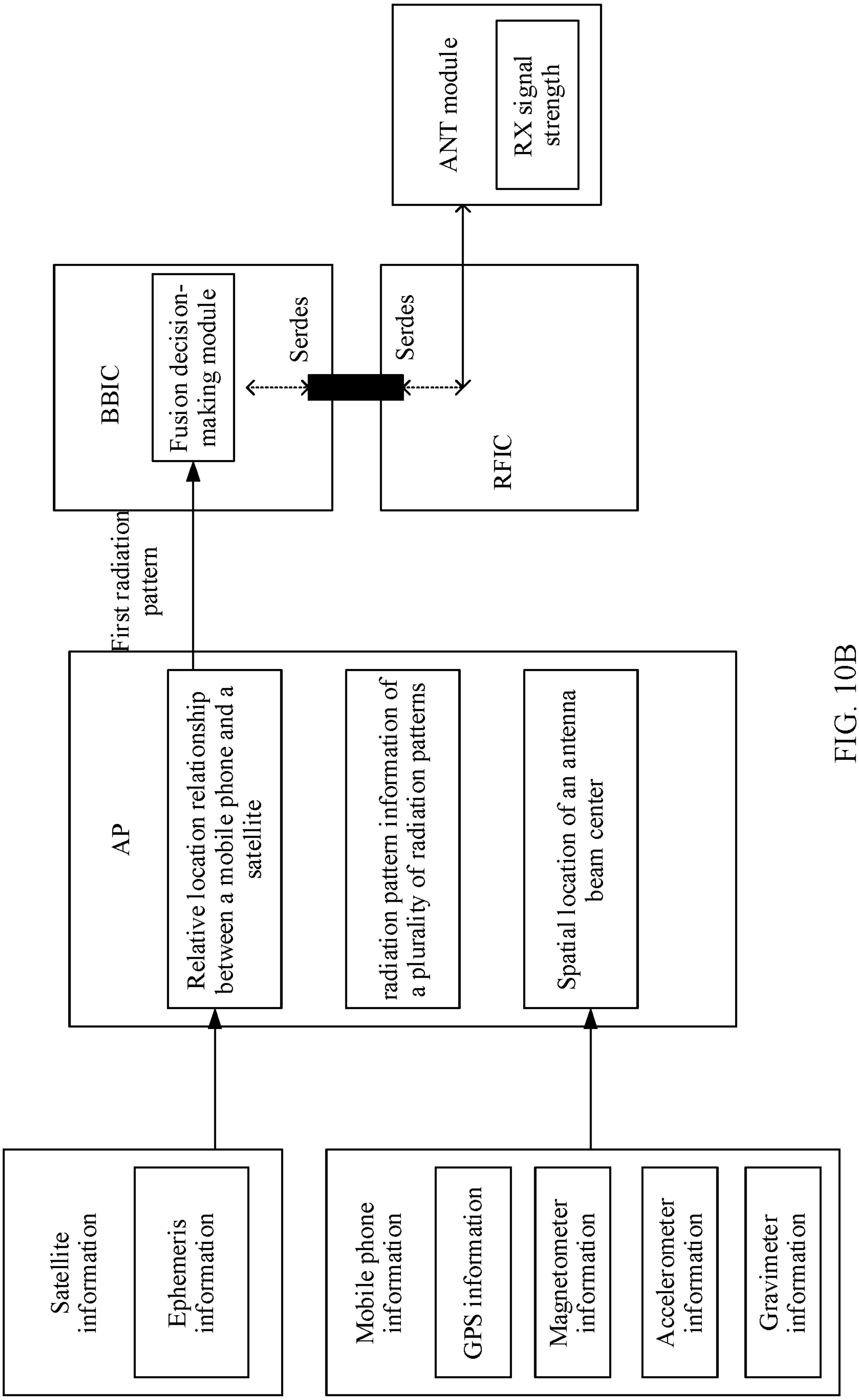
ANT module
RX signal strength
BBIC
Fusion decision-making module
Serdes
Serdes
RFIC
First radiation pattern
AP
Relative location relationship between a mobile phone and a satellite
radiation pattern information of a plurality of radiation patterns
Spatial location of an antenna beam center
Satellite information
Ephemeris information
Mobile phone information
GPS information
Magnetometer information
Accelerometer information
Gravimeter information

FIG. 10B

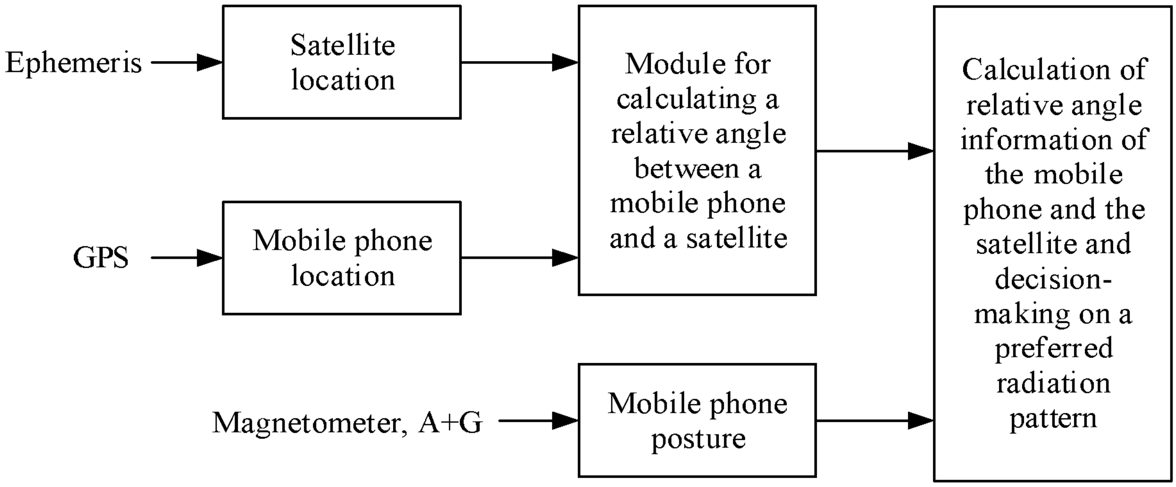


FIG. 10C

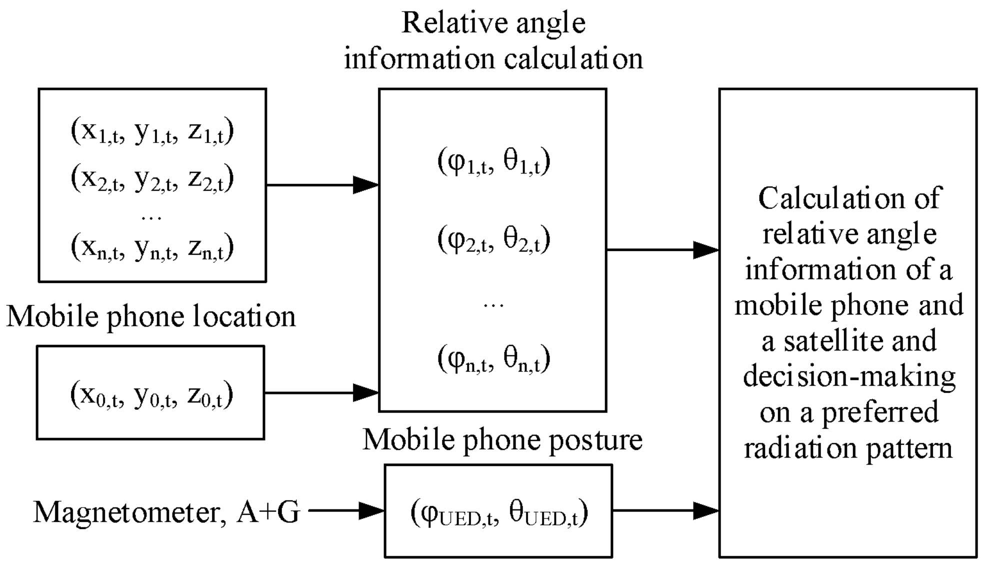


FIG. 10D

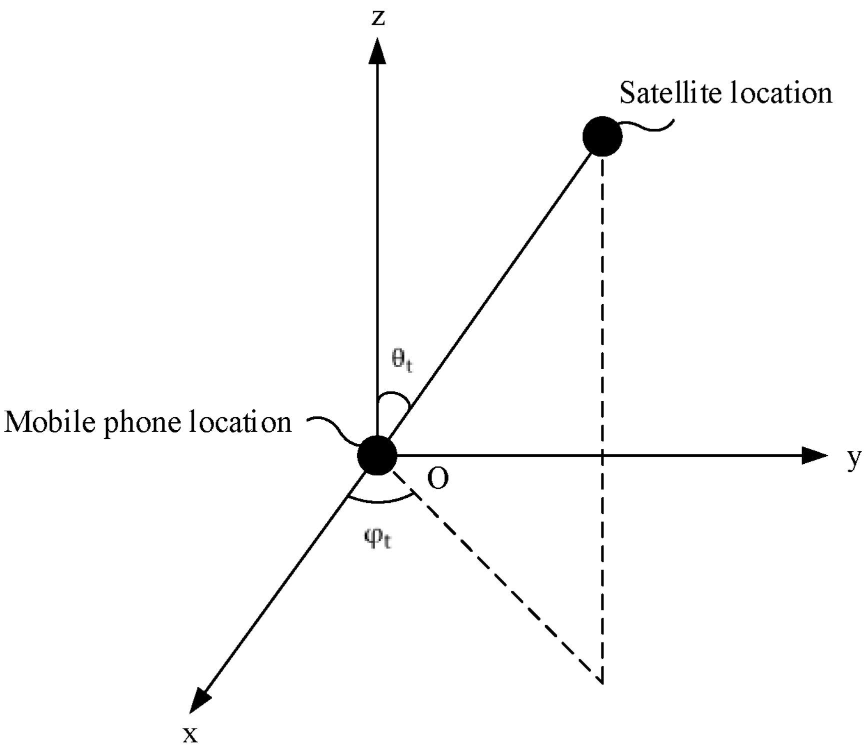


FIG. 10E

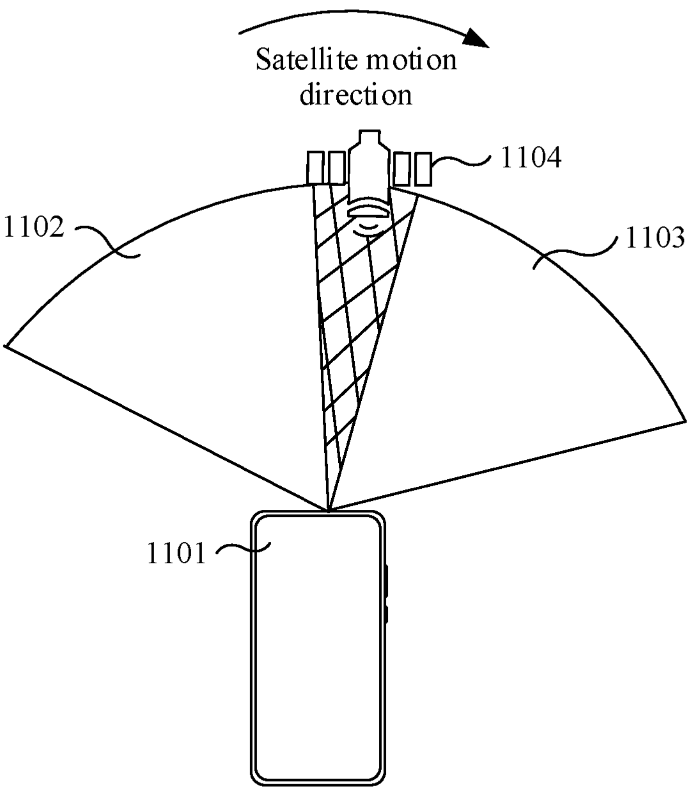


FIG. 11A

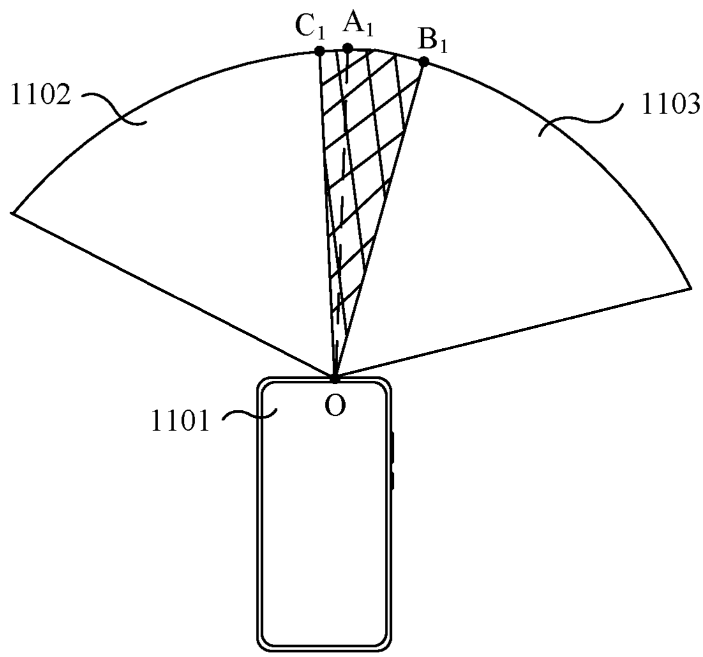


FIG. 11B

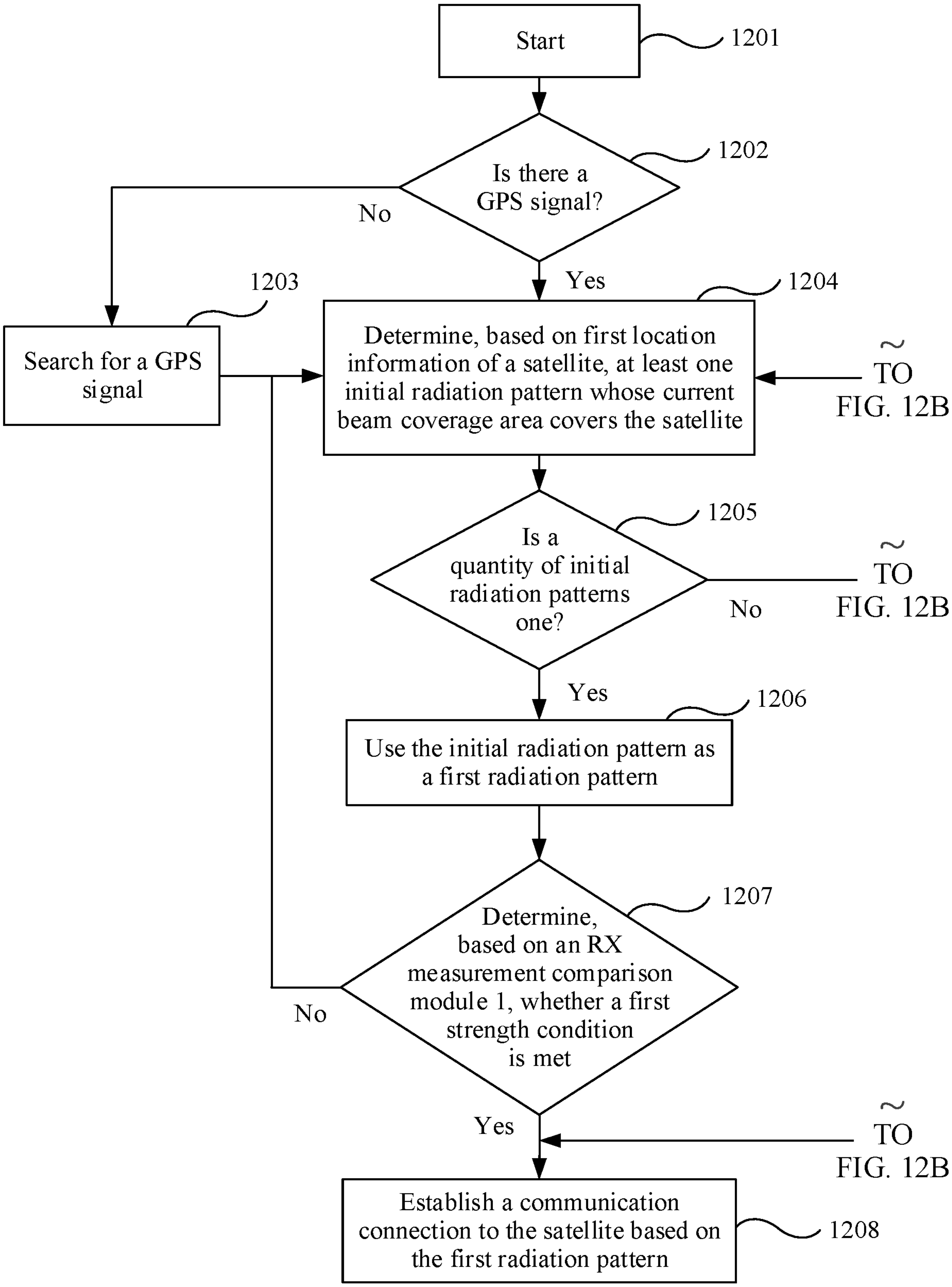
Start
1201
Is there a GPS signal?
1202
No
Yes
1203
Search for a GPS signal
1204
Determine, based on first location information of a satellite, at least one initial radiation pattern whose current beam coverage area covers the satellite
TO FIG. 12B
1205
Is a quantity of initial radiation patterns one?
No
TO FIG. 12B
Yes
1206
Use the initial radiation pattern as a first radiation pattern
1207
Determine, based on an RX measurement comparison module 1, whether a first strength condition is met
No
Yes
TO FIG. 12B
Establish a communication connection to the satellite based on the first radiation pattern
1208

FIG. 12A

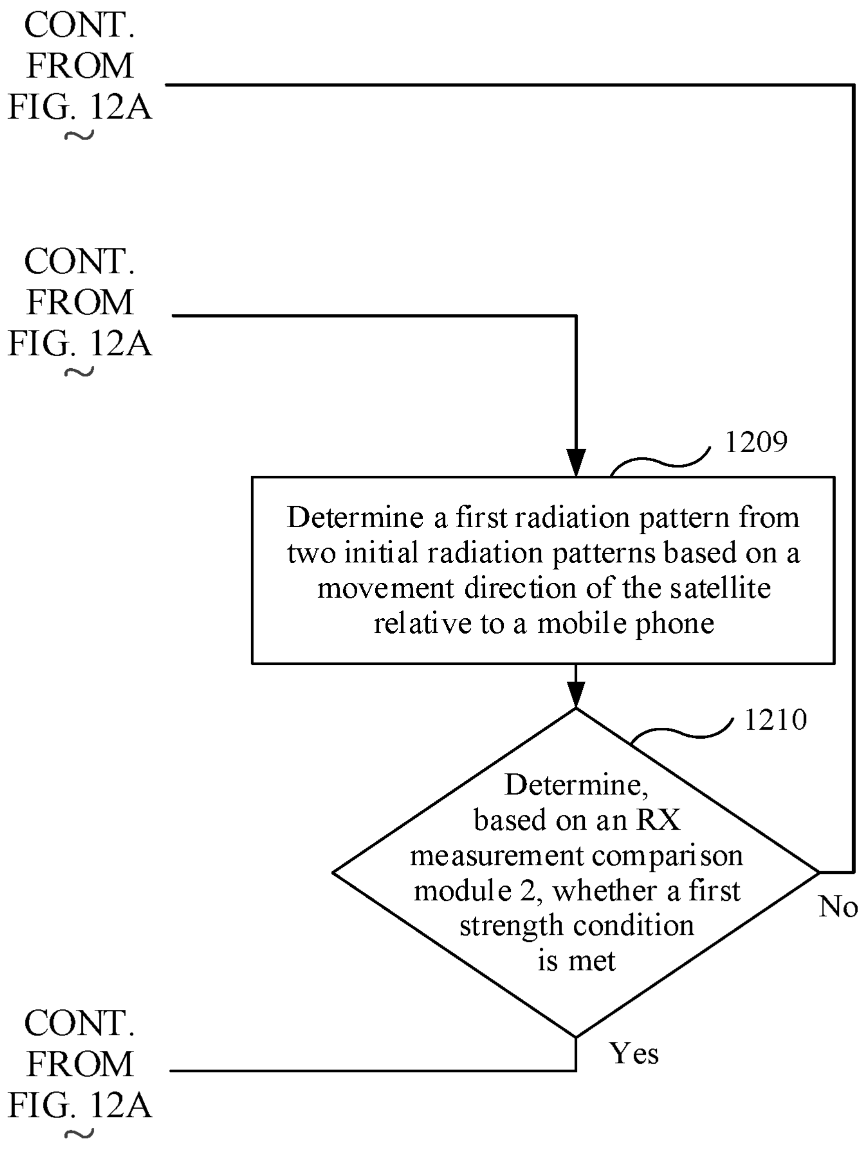
CONT.
FROM
FIG. 12A
CONT.
FROM
FIG. 12A
1209
Determine a first radiation pattern from two initial radiation patterns based on a movement direction of the satellite relative to a mobile phone
1210
Determine, based on an RX measurement comparison module 2, whether a first strength condition is met
No
Yes
CONT.
FROM
FIG. 12A

FIG. 12B

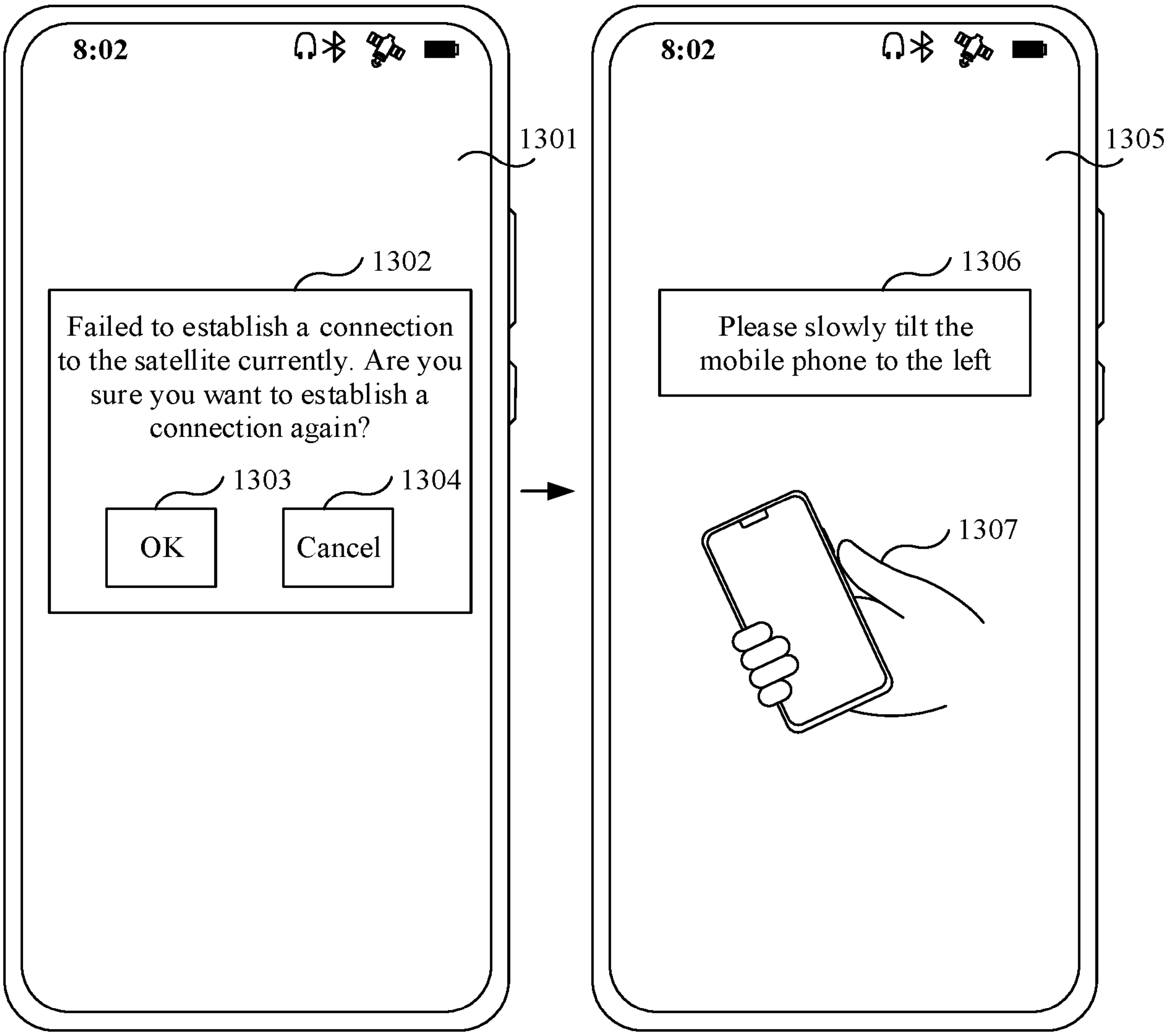
8:02
1301
1302
Failed to establish a connection to the satellite currently. Are you sure you want to establish a connection again?
1303
1304
OK
Cancel
8:02
1305
1306
Please slowly tilt the mobile phone to the left
1307

FIG. 13

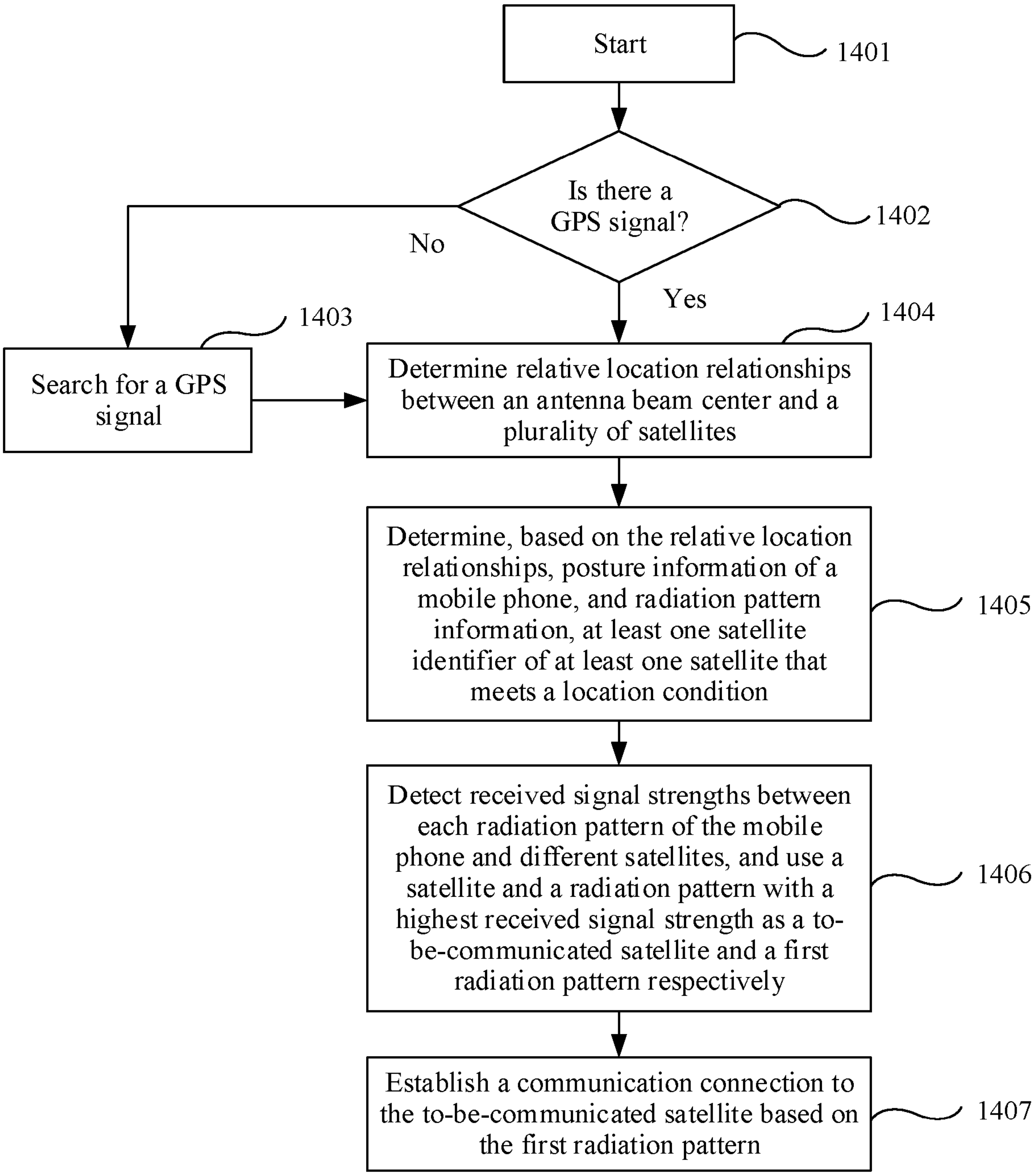
Start
1401
Is there a GPS signal?
1402
No
Yes
1403
Search for a GPS signal
1404
Determine relative location relationships between an antenna beam center and a plurality of satellites
Determine, based on the relative location relationships, posture information of a mobile phone, and radiation pattern information, at least one satellite identifier of at least one satellite that meets a location condition
1405
Detect received signal strengths between each radiation pattern of the mobile phone and different satellites, and use a satellite and a radiation pattern with a highest received signal strength as a to-be-communicated satellite and a first radiation pattern respectively
1406
Establish a communication connection to the to-be-communicated satellite based on the first radiation pattern
1407

FIG. 14

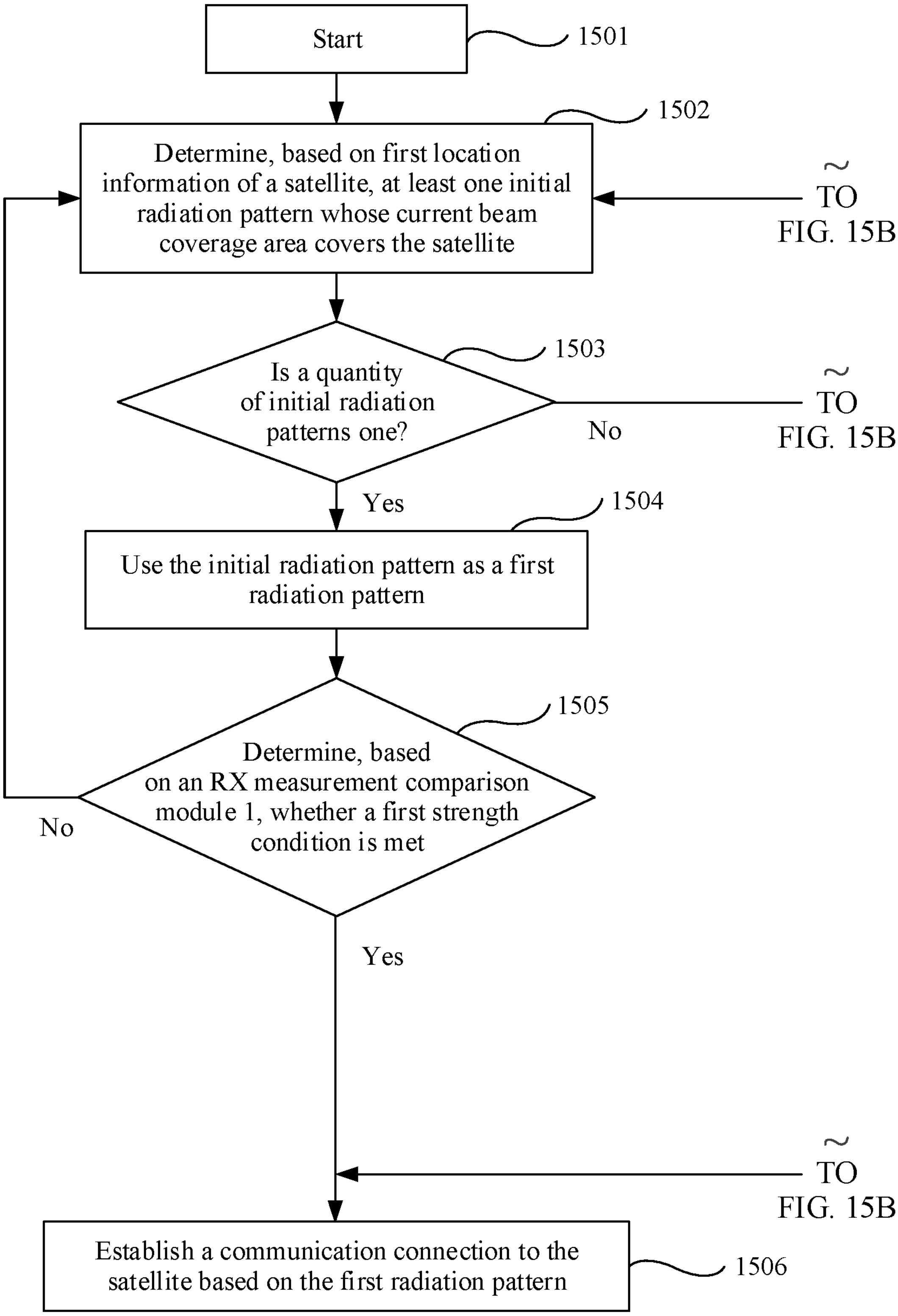
Start
1501
1502
Determine, based on first location information of a satellite, at least one initial radiation pattern whose current beam coverage area covers the satellite
~ TO FIG. 15B
1503
Is a quantity of initial radiation patterns one?
No
~ TO FIG. 15B
Yes
1504
Use the initial radiation pattern as a first radiation pattern
1505
Determine, based on an RX measurement comparison module 1, whether a first strength condition is met
No
Yes
~ TO FIG. 15B
Establish a communication connection to the satellite based on the first radiation pattern
1506

FIG. 15A

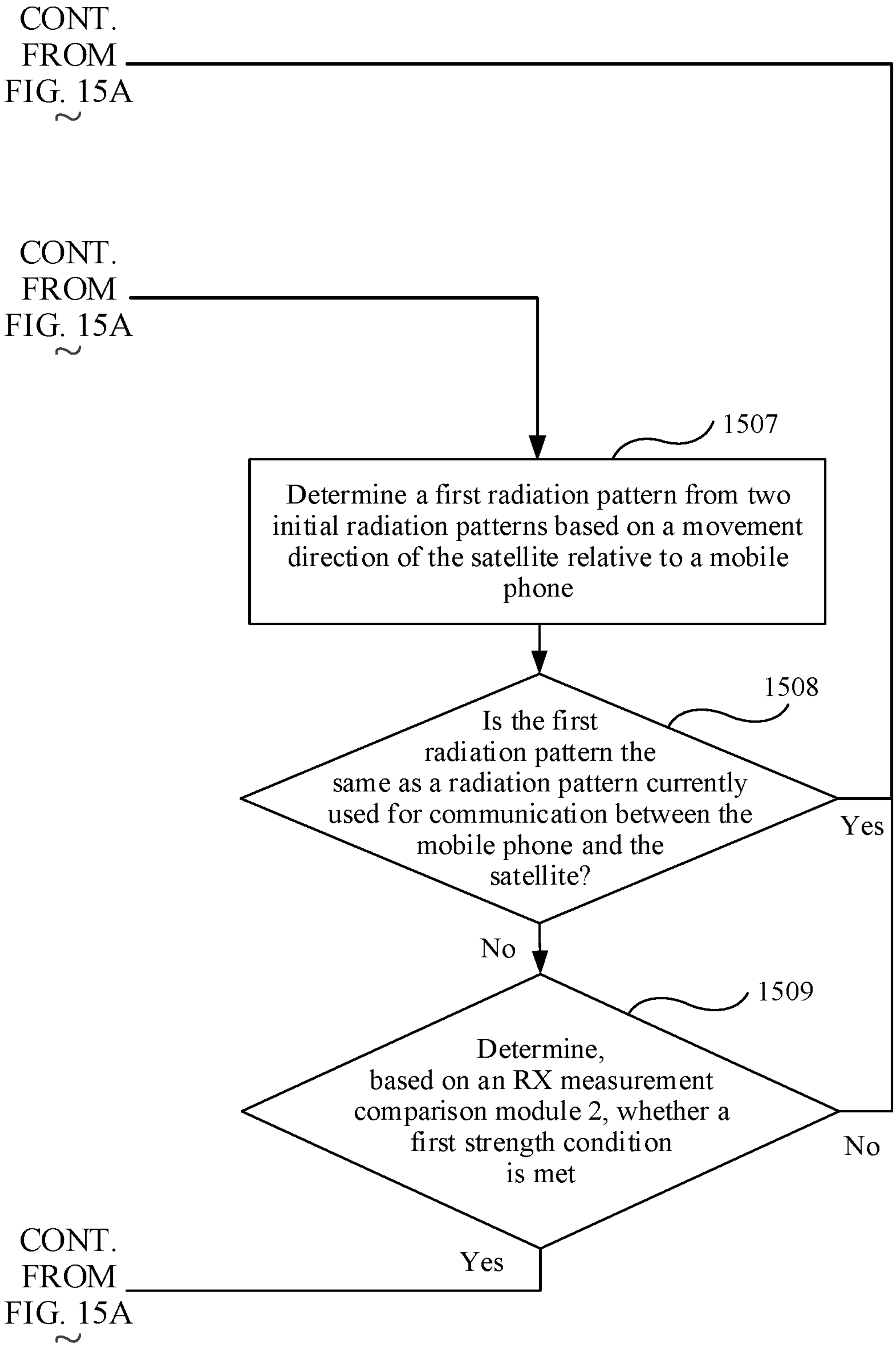
CONT. FROM FIG. 15A
CONT. FROM FIG. 15A
1507
Determine a first radiation pattern from two initial radiation patterns based on a movement direction of the satellite relative to a mobile phone
1508
Is the first radiation pattern the same as a radiation pattern currently used for communication between the mobile phone and the satellite?
Yes
No
1509
Determine, based on an RX measurement comparison module 2, whether a first strength condition is met
No
Yes
CONT. FROM FIG. 15A

FIG. 15B

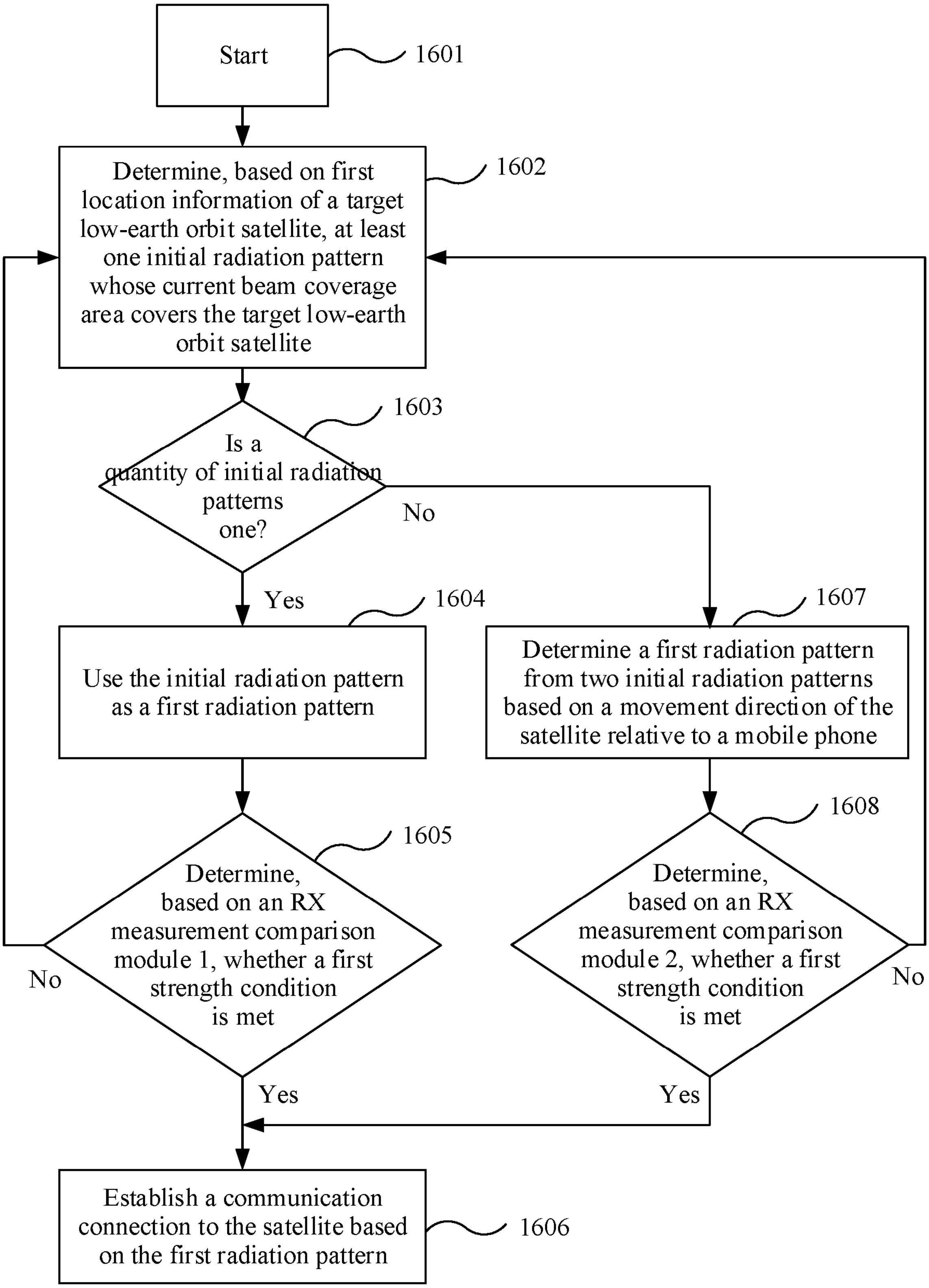
Start
1601
Determine, based on first location information of a target low-earth orbit satellite, at least one initial radiation pattern whose current beam coverage area covers the target low-earth orbit satellite
1602
Is a quantity of initial radiation patterns one?
1603
No
Yes
Use the initial radiation pattern as a first radiation pattern
1604
Determine a first radiation pattern from two initial radiation patterns based on a movement direction of the satellite relative to a mobile phone
1607
Determine, based on an RX measurement comparison module 1, whether a first strength condition is met
1605
Determine, based on an RX measurement comparison module 2, whether a first strength condition is met
1608
No
No
Yes
Yes
Establish a communication connection to the satellite based on the first radiation pattern
1606

FIG. 16

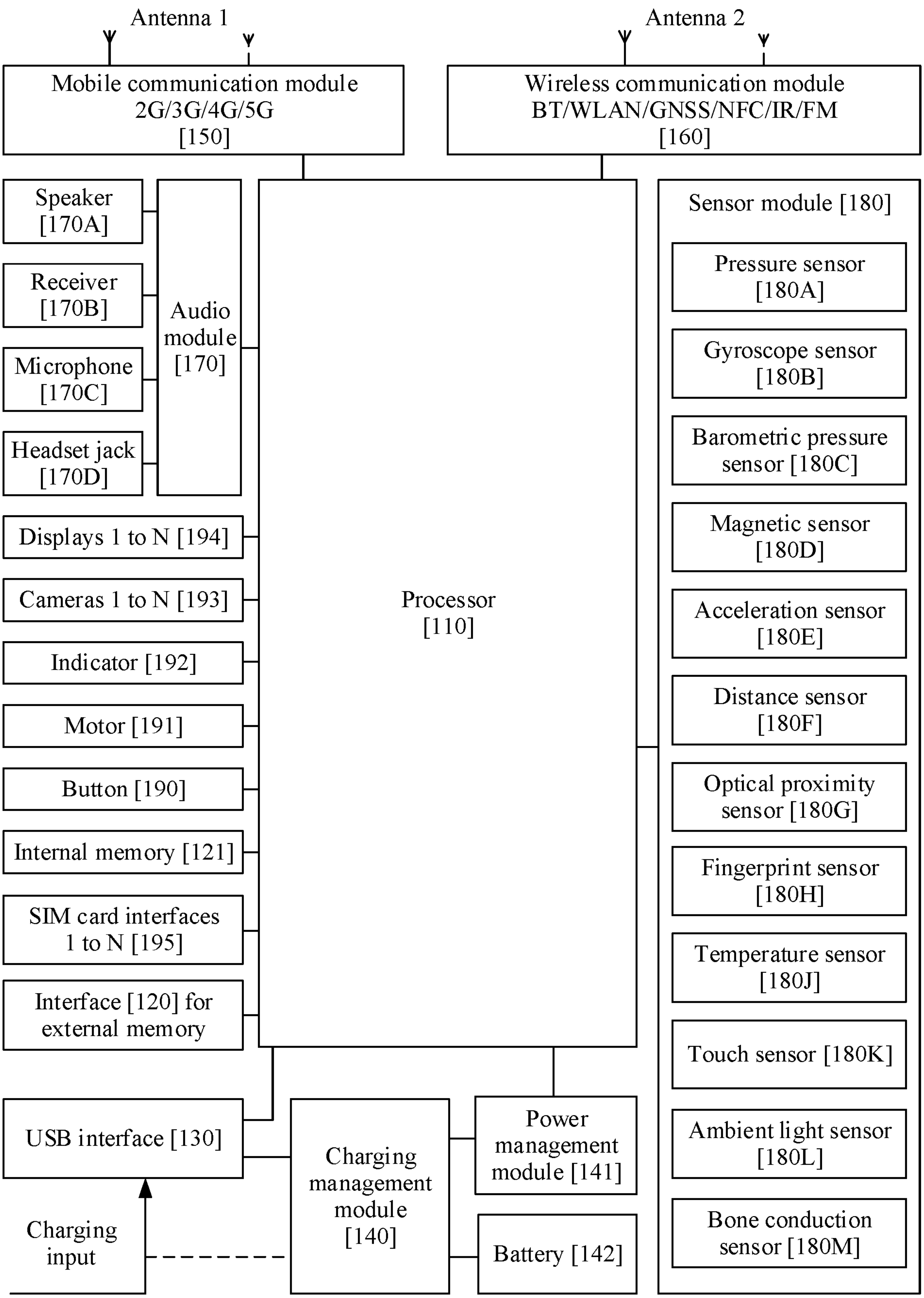
Antenna 1
Antenna 2
Mobile communication module 2G/3G/4G/5G [150]
Wireless communication module BT/WLAN/GNSS/NFC/IR/FM [160]
Speaker [170A]
Receiver [170B]
Microphone [170C]
Headset jack [170D]
Audio module [170]
Displays 1 to N [194]
Cameras 1 to N [193]
Indicator [192]
Motor [191]
Button [190]
Internal memory [121]
SIM card interfaces 1 to N [195]
Interface [120] for external memory
Processor [110]
Sensor module [180]
Pressure sensor [180A]
Gyroscope sensor [180B]
Barometric pressure sensor [180C]
Magnetic sensor [180D]
Acceleration sensor [180E]
Distance sensor [180F]
Optical proximity sensor [180G]
Fingerprint sensor [180H]
Temperature sensor [180J]
Touch sensor [180K]
Ambient light sensor [180L]
Bone conduction sensor [180M]
USB interface [130]
Charging input
Charging management module [140]
Power management module [141]
Battery [142]

FIG. 17

## INTERNATIONAL SEARCH REPORT

International application No. **PCT/CN2024/117166**

**A. CLASSIFICATION OF SUBJECT MATTER**

H04B 7/185(2006.01)i

According to International Patent Classification (IPC) or to both national classification and IPC

**B. FIELDS SEARCHED**

Minimum documentation searched (classification system followed by classification symbols)

IPC: H04B H04W

Documentation searched other than minimum documentation to the extent that such documents are included in the fields searched

Electronic data base consulted during the international search (name of data base and, where practicable, search terms used)

CNTXT, WPABS, ENTXT, ENTXTC, VEN: 卫星, 终端, 电子设备, 手机, 波束, 天线, 多个, 方向, 图, 位置, 坐标, 星历, 覆盖, 不同, satellite, terminal, electronic device, cell phone, beam, antenna, plurality, orientation, map, location, coordinate, ephemeris, coverage, different

**C. DOCUMENTS CONSIDERED TO BE RELEVANT**

| Category* | Citation of document, with indication, where appropriate, of the relevant passages | Relevant to claim No. |
|---|---|---|
| X | EP 3787199 A1 (TIONESTA, LLC) 03 March 2021 (2021-03-03)<br>description, paragraphs 45-152, and figures 2A-6 | 1-18 |
| X | EP 3787111 A1 (TIONESTA, LLC) 03 March 2021 (2021-03-03)<br>description, paragraphs 45-144, and figures 2A-8 | 1-18 |
| X | CN 115939758 A (HUBEI XINGJI SHIDAI TECHNOLOGY CO., LTD.) 07 April 2023 (2023-04-07)<br>description, paragraphs 82-166 | 1-18 |
| A | CN 116405099 A (CHONGQING LIANGJIANG SATELLITE MOBILE COMMUNICATION CO., LTD.) 07 July 2023 (2023-07-07)<br>entire document | 1-18 |
| A | WO 2023011602 A1 (HUAWEI TECHNOLOGIES CO., LTD.) 09 February 2023 (2023-02-09)<br>entire document | 1-18 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **04 December 2024** | **10 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/117166**

| Patent document cited in search report | | | Publication date (day/month/year) | Patent family member(s) | | | Publication date (day/month/year) |
|---|---|---|---|---|---|---|---|
| EP | 3787199 | A1 | 03 March 2021 | US | 10651920 | B1 | 12 May 2020 |
| EP | 3787111 | A1 | 03 March 2021 | US | 10756443 | B1 | 25 August 2020 |
| | | | | US | 10873136 | B1 | 22 December 2020 |
| CN | 115939758 | A | 07 April 2023 | None | | | |
| CN | 116405099 | A | 07 July 2023 | None | | | |
| WO | 2023011602 | A1 | 09 February 2023 | EP | 4362350 | A1 | 01 May 2024 |
| | | | | CA | 3226123 | A1 | 09 February 2023 |
| | | | | CN | 115706601 | A | 17 February 2023 |
| | | | | IN | 202437001562 | A | 26 January 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202410174039